# EUROPÄISCHE PATENTSCHRIFT

(11) **EP 1 894 113 B1**
(45) Veröffentlichungstag und Bekanntmachung des Hinweises auf die Patenterteilung: **03.06.2020**
(21) Anmeldenummer: 05798012.0
(22) Anmeldetag: 25.09.2005
(51) Int. Cl.: G06F 13/38

(54) **VERFAHREN ZUR DATENKOMMUNIKATION VON BUSTEILNEHMERN EINES OFFENEN AUTOMATISIERUNGSSYSTEMS**
METHOD FOR DATA COMMUNICATION OF BUS USERS IN AN OPEN AUTOMATION SYSTEM
PROCEDE DE COMMUNICATION DE DONNEES DE BUS PARTICIPANTS D'UN SYSTEME D'AUTOMATISATION OUVERT

(30) Priorität: 23.06.2005 DE 102005029656; 23.06.2005 DE 102005029654; 23.06.2005 DE 102005029655
(43) Veröffentlichungstag der Anmeldung: 05.03.2008
(60) Teilanmeldung: 08022031.2
(73) Patentinhaber: Hilscher Gesellschaft für Systemautomation mbH, 65795 Hattersheim (DE); Hilscher, Hans Jürgen, 65795 Hattersheim (DE)
(72) Erfinder: HILSCHER, Hans-Jürgen, D-65795 Hattersheim (DE)
(74) Vertreter: Dreykorn-Lindner, Werner
(86) Internationale Anmeldenummer: PCT/EP2005/010348
(87) Internationale Veröffentlichungsnummer: WO 2006/136201

(56) Entgegenhaltungen:
- DE-A1- 10 258 469
- US-A- 5 988 846
- US-A1- 2001 014 833
- US-A1- 2002 095 612
- BEIKIRCH H ET AL: "Smart field bus nodes with programmable sensor interfaces" EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, Bd. 2, 15. Oktober 2001 (2001-10-15), Seiten 683-686, XP010589163 ISBN: 0-7803-7241-7
- WILLMANN P ET AL: "An Efficient Programmable 10 Gigabit Ethernet Network Interface Card" HIGH-PERFORMANCE COMPUTER ARCHITECTURE, 2005. HPCA-11. 11TH INTERNATIONAL SYMPOSIUM ON SAN FRANCISCO, CA, USA 12-16 FEB. 2005, PISCATAWAY, NJ, USA,IEEE, 12. Februar 2005 (2005-02-12), Seiten 96-107, XP010772269 ISBN: 0-7695-2275-0
- VALDES M D ET AL: "Configurable interfaces oriented to microprocessor-based control systems" INDUSTRIAL ELECTRONICS SOCIETY, 1998. IECON '98. PROCEEDINGS OF THE 24TH ANNUAL CONFERENCE OF THE IEEE AACHEN, GERMANY 31 AUG.-4 SEPT. 1998, NEW YORK, NY, USA,IEEE, US, Bd. 3, 31. August 1998 (1998-08-31), Seiten 1653-1656, XP010308257 ISBN: 0-7803-4503-7
- HOSEK M: "Clustered-architecture motion control system utilizing IEEE 1394b communication network" AMERICAN CONTROL CONFERENCE, 2005. PROCEEDINGS OF THE 2005 PORTLAND, OR, USA JUNE 8-10, 2005, PISCATAWAY, NJ, USA,IEEE, 8. Juni 2005 (2005-06-08), Seiten 2939-2945, XP010820243 ISBN: 0-7803-9098-9

## Beschreibung

Die Erfindung betrifft ein Verfahren zur Datenkommunikation und Konfiguration von Busteilnehmern eines offenen Automatisierungssystems gemäß dem Patentanspruch 1 und, gemäß dem Patentanspruch 9, eine Vorrichtung hierfür.

Seit längerem ist es bekannt, in der Steuer- und Automatisierungstechnik Feldbusse und Ethernet, insbesondere die Erweiterung bezüglich Real-Time Ethernet zur Datenkommunikation zwischen einzelnen, an der Steuerung eines Prozesses beteiligten Einheiten zu verwenden. Beispiele für bekannte Feldbusse sind CAN-Bus, Profibus, Modbus, DeviceNet oder Interbus. Die Kommunikation der Einheiten erfolgt auf dem Feldbus/Ethernet anhand von spezifizierten Protokollen. Um der Forderung nach offenen Systemen zur Vernetzung entsprechen zu können, besteht die Notwendigkeit, einfache und kostengünstige Kommunikationsmechanismen zur Verfügung zu stellen, um industrielle Geräte netzwerkfähig zu machen. Diese Forderung besteht vor allem auch im Zusammenhang mit der Kopplung von Antriebskomponenten, wie zwischen Antriebsregelungen, Leistungsteilen und Gebern bei numerisch gesteuerten Werkzeugmaschinen und Robotern, bei denen eine Mehrzahl interpolierender Achsen synchron betrieben werden müssen. Bei der zunehmenden Vernetzung verschiedenster technischer Systeme wächst deshalb die Forderung nach standardisierten Strukturen in der Industrie.

Ein Beispiel hierfür ist der Feldbus nach dem sogenannten Aktuator-Sensor-Interface-Standard, kurz ASI-Standard. Dieses Feldbuskonzept ist speziell darauf abgestimmt, binäre Sensoren oder Aktuatoren direkt busfähig zu machen, was mit anderen Feldbussystemen bislang nicht möglich war. Ein Automatisierungssystem besteht aus mit dem Bussystem koppelbaren Hardwarekomponenten, insbesondere Motoren, Sensoren, Aktuatoren u.a - d.h. der Prozessumgebung - die im Zusammenspiel mit einer oder mehreren übergeordneten Steuerungen einen automatischen Produktionsprozess bilden. Der Busmaster übernimmt dabei alle Aufgaben, die für die Abwicklung des Busbetriebes notwendig sind. Er ist in der Regel getrennt von der eigentlichen Steuereinheit zum Steuern der Hardwarekomponenten.

Um auf einfache Weise eine offene und flexible Betriebsweise des Systems zu erzielen, wobei die Hardwarekomponenten ohne Änderungen der Steuerprogramme austauschbar sind, ist aus der DE 198 50 469 A1 ein Automatisierungssystem und ein Verfahren zum Zugriff auf die Funktionalität von Hardwarekomponenten bekannt, bei dem diese jeweils eine Systemverbindungseinheit mit Funktionsobjekten als Abbild der realen Funktionalität der Hardwarekomponenten aufweisen, wobei die Funktionsobjekte zum Zugriff auf die Funktionalität der Hardwarekomponenten über das Bussystem vorgesehen sind. Für eine Realisierung der Hardwarekomponenten als "plug and play"-Module ist es erforderlich, direkt in der Hardwarekomponente einen speziellen Baustein vorzusehen, auf dem die Funktionsobjekte als Zugang zur Funktionalität der Hardwarekomponenten ablauffähig sind. Dieser spezielle Baustein ist in Form der Systemverbindungseinheit realisiert. Die Systemverbindungseinheit ist mit einem Bussystem des Automatisierungssystems gekoppelt, so dass Kommunikationsdaten beispielsweise von einem Leitsystem zur Hardwarekomponente wie auch von und zu sämtlichen mit dem Bussystem gekoppelten weiteren Komponenten übertragen werden können. Mit Hilfe der Systemverbindungseinheit wird es somit möglich, Hardwarekomponenten ohne Änderung der bestehenden Strukturen des Automatisierungssystems zu ersetzen, zu ergänzen etc. Weiterhin können spezielle zwischen einem Leitsystem und den Hardwarekomponenten bisher erforderliche Vermittlungsobjekte entfallen. Für einen Netzübergang weist die Systemverbindungseinheit einen Speicher zur Speicherung von zwischen den beiden Bussystemen erforderlichen Protokollen auf. So ist beispielsweise auf einfache Weise ein Netzübergang zwischen ETHERNET (Datenübertragungsrate 10 Mbit/s), insbesondere des FAST ETHERNET (Datenübertragungsrate 100 Mbit/s - Norm IEEE Std 802.3-1998), und dem Profibus möglich. Die Einbettung der den Hardwarekomponenten zugeordneten Systemverbindungseinheiten in ihre Umgebung kann dadurch erfolgen, dass die Funktionsobjekte mindestens ein erstes Funktionsobjekt zur Erzeugung einer minimalen Funktionalität einer Hardwarekomponente, mindestens ein zweites Funktionsobjekt zur Verschaltung von Funktionsobjekten und mindestens ein drittes Funktionsobjekt zur Auflistung von in der Systemverarbeitungseinheit und/oder auf entfernten Systemverarbeitungseinheiten und/oder entfernten Rechnern vorhandenen Funktionsobjekten enthalten. Die besondere Funktion des Funktionsobjekts besteht darin, die Summe der Funktionalität des Systems zu enumerieren, d. h. zu erfragen. Die Funktionsobjekte sind beispielsweise als sogenannte DCOM-Objekte (Distributed Component Object Model) bzw. als sogenannte OLE-Objekte (Object Linking and Embedding) ausgebildet. Weiterhin weist die Systemverbindungseinheit ein Laufzeitsystem (Runtime-System) sowie eine Protokollverarbeitungseinheit (Profibus, UDP/IP, RPC) auf. Die Systemverbindungseinheit ist deshalb ein Standardbaustein, der die für den Feldbus spezifizierten Protokolle gewährleisten muss und der häufig recht komplex und damit vergleichsweise teuer ist.

Um eine fehlersichere Kommunikation der an einem sicherheitskritischen Prozess beteiligten Einheiten zu gewährleisten, wobei gleichzeitig die Verwendung von Standardbausteinen als Busmaster möglich ist, ist aus der DE 199 28 517 C2 ein Steuerungssystem bekannt, bei dem der Busmaster getrennt von einer ersten Steuereinheit und einer Signaleinheit an den Feldbus angeschlossen ist, bei dem die erste Steuereinheit bezogen auf eine Umlaufrichtung des Telegrammverkehrs vor der Signaleinheit angeordnet ist, und bei dem die erste Steuereinheit Mittel aufweist, um Telegrammdaten, die an die Signaleinheit adressiert sind, durch fehlersichere Telegrammdaten zu ersetzen. Dabei ist es möglich, die erste Steuereinheit als einfachen Busteilnehmer, d. h. ohne eine Busmasterfunktionalität an den Feldbus anzuschließen. Weiterhin weist das Steuerungssystem eine zweite Steuereinheit zum Steuern von sicherheitsunkritischen Prozessen auf, welche getrennt von der ersten Steuereinheit an den Feldbus angeschlossen ist. Die zweite Steuereinheit weist neben anderen, an sich bekannten Komponenten einen Mikro-Controller sowie einen Master-Protokollchip auf. Der Master-Protokollchip besitzt im vorliegenden Fall eine Busmasterfunktionalität für einen Interbus und wird als Busmaster bezeichnet. Derartige Master-Protokollchips sind als Standardbauelemente von verschiedenen Herstellern erhältlich. Ein in der ersten Steuereinheit enthaltener Kommunikationsbaustein besitzt einen Slave-Protokollchip, der über einen ersten Busanschluss eingangsseitig und über einen zweiten Busanschluss ausgangsseitig mit dem Feldbus verbunden ist. Der Protokollchip entspricht den in den Signaleinheiten enthaltenen Protokollchips, welche als Busteilnehmer sicherheitsbezogene Einrichtungen an den Feldbus anschließen. Um bei einem Feldbus mit sequentiell umlaufenden Telegrammverkehr auch eine Slaveto-Slave-Kommunikation zwischen Busteilnehmern bereitzustellen, von denen keiner eine Busmasterfunktionalität besitzt, wird der Protokollchip eines Busteilnehmers, der Daten an andere Busteilnehmer versenden will, um einen Sendespeicher und gegebenenfalls einen Empfangsspeicher ergänzt wird. Die Funktionsweise des umlaufenden Telegrammverkehrs basiert also auf dem in jedem Busteilnehmer angeordneten gleichen Slave-Protokoll-Chip, häufig als "Serielles Mikroprozessor Interface" (SUPI) bezeichnet. Durch die Benutzung eines Standardbauelement, das von verschiedenen Herstellern erhältlich ist, können die Kosten des Steuerungssystem niedriger gehalten werden; insgesamt sind die Kosten für den Busmaster und die Signaleinheiten, die für den Feldbus spezifizierten Protokolle gewährleisten müssen, komplex und damit vergleichsweise hoch.

Ein ähnlicher Weg wird bei dem aus dem DE 299 07 909 U1 bekannten und in der Fertigungseinrichtung integrierten Überwachungssystem, basierend auf Einsteckkarten, eingeschlagen. Im einzelnen weist jede Einsteckkarte einen Mikroprozessor, eine Speichereinheit zum Abspeichern der Prozessdaten, die mit dem Mikroprozessor verbunden ist, eine Sensorbus-Schnittstelle (RS 485) und eine Feldbus-Schnittstelle (RS 485), die mit dem Mikroprozessor verbunden sind, eine Service-Schnittstelle (RS-232) zum Anschluss an ein Modem und eine Schnittstelle (ISA-Busschnittstelle) zur Verbindung des Mikroprozessors mit einem Host-Rechner auf. Die integrierte Feldbus-Schnittstelle bzw. Sensorbus-Schnittstelle weist jeweils eine ISO-Schnittstelle und einen Feldbus-Datenprozessor (SPC 3), im vorliegenden Beispiel ein Profibus-Datenprozessor, auf. Eine Maschinensteuerung ist wahlweise über die integrierte Profibus-Schnittstelle mit der Einsteckkarte oder über eine I/O-Box mit Sensor-Elektronikeinheiten verbunden. Die intelligenten Sensor-Elektronikeinheiten ermöglichen jeweils die Versorgung eines Sensors, die Erfassung der Sensordaten, die Messsignalvorverarbeitung (Signalfilterung, -Verstärkung usw.) und die einfache Signalanalyse (digitales Filtern, Erfassen der Spitzenwerte, usw.). Unter einer intelligenten Sensor-Elektronikeinheit wird daher ein Modul verstanden, welches einen eigenen Mikro-Controller, Filter, Verstärker, eine Stromversorgung und eine Sensorbusschnittstelle aufweist. Die Sensor-Elektronikeinheit kann über die Einsteckkarte vor jeder Bearbeitung neu parametriert werden. Dies betrifft z.B. die Verstärkungsfaktoren, die Filterwerte und die Verrechnung mehrerer Eingangssignale zu einem Summensignal. Durch die Profibus-Schnittstelle wird die Überwachung mit dem Bearbeitungsprozess synchronisiert. Über sogenannte automatisierte Einstellroutinen kann das Überwachungssystem einfach in die Fertigungseinrichtung eingebunden werden. Die automatisierten Einstellroutinen führen z.B. die Erkennung der Sprache auf der Steuerung und die damit verbundene Sprachumschaltung, die Erkennung der Sensoren am Sensorbus und die automatische Konfiguration der Verstärkungs- und Filterwerte durch. Die Ein- und Ausgänge der speicherprogrammierbaren Steuerung (SPS) werden selbständig zugeordnet und die Uhrzeit einer Echtzeit-Uhr auf der Einsteckkarte wird automatisch mit der Uhrzeit des Hostrechners abgeglichen. Die Einsteckkarte erlaubt die Überwachung von beispielsweise bis zu vier Sensorkanälen, wobei mit dem Kommunikatiönsprozessor für die Sensorbus-Schnittstelle eine Datenrate von bis zu 460,8 kBaud bei gleichzeitig hoher Störsicherheit erreicht wird. Vorzugsweise verarbeitet der Mikroprozessor der Einsteckkarte die Daten im Hammingcode mit einer Hamming-Distanz von 4 und ist für die Verschlüsselung und Entschlüsselung zuständig. Zwischen dem Mikroprozessor und der ISA-Busschnittstelle zum Host-Rechner ist ein Adressdekoder vorgesehen, der auf an sich bekannte Weise für die Kodierung und Dekodierung der Adress- und Speicherzugriffe im PC zuständig ist. Die Spannungsversorgung der Einsteckkarte erfolgt über die ISA-Schnittstelle, über die auch die Kommunikation mit dem Hostrechner erfolgt. Da die Einsteckkarte einen eigenen Prozessor aufweist, der für die Überwachung zuständig ist, wird die CPU des Hostrechners nicht mit Rechenleistung belegt. Für die Kommunikation mit den Sensor-Elektronikeinheiten ist ein echtzeitfähiges Sensorbusprotokoll definiert. Dies ermöglicht die Abfrage der Messdaten sowie die Steuerung und Parametrierung der Sensoren mit definierten Antwortzeiten. Die Überwachungsdaten werden beispielsweise in einem Takt von 10 ms verarbeitet und die Sensordatenvorverarbeitung erlaubt eine Abtastrate unter 1 ms. Damit kann für eine Kollisionsüberwachung eine Reaktionszeit unter 1 ms garantiert werden. Über den Feld- bzw. Profibus können neben den Synchronisationsdaten in vorteilhafter Weise auch prozessspezifische Achssignale wie Drehmomente, Motorströme und Achsgeschwindigkeiten übertragen werden. Das Protokoll kann beispielsweise die Abfrage von bis zu acht verschiedenen Achsen erlauben. Die benötigten Steuerdaten können auch direkt aus dem Steuerkern der Maschinensteuerung über den Feldbus an den Mikroprozessor der Einsteckkarte geliefert werden. In diesem Fall wird keine spezielle Sensorik benötigt und die Sensorbus-Schnittstelle auf der Einsteckkarte kann entfallen. Über die Service-Schnittstelle können alle Einstellungen, Software-Updates sowie die Prozessvisualisierung erfolgen. Durch die Auslegung als Modemschnittstelle sind über ein Modem Teleservice- und Ferndiagnose-Funktionalitäten verfügbar. Dadurch ist das System aus der Ferne voll bedien- und parametrierbar. Die Visualisierung der Prozessdaten kann über ein Programm auf dem Hostrechner (Steuerung, Industrie-PC) erfolgen. Nachteilig ist wieder, dass die Einsteckkarten und die intelligenten Sensor-Elektronikeinheiten, die für den Feldbus spezifizierten Protokolle gewährleisten müssen, komplex und damit vergleichsweise teuer sind.

Weiterhin ist aus der DE 198 31 405 A1 ein Steuerungssystem mit einem Personalcomputer bekannt, der zur Bearbeitung eines Steuerprogramms zumindest einen PC-Prozessor, einen Programmspeicher und einen Datenspeicher aufweist und der mit einem Kommunikationsprozessor zur Anschaltung an einen Feldbus versehen ist, an den Sensoren und/oder Aktuatoren zur Steuerung eines Prozesses anschließbar sind. Zur Kommunikation am Feldbus ist in dem Personalcomputer eine Steckkarte gesteckt, die an einen internen PCI-Bus, der Daten-, Steuer- und Adressleitungen besitzt, angeschlossen ist. Über eine PCI-Busanschaltung und den internen Bus kommuniziert der PC-Prozessor mit den Komponenten der Steckkarte. Auf der Steckkarte ist der Kommunikationsprozessor angeordnet, der nach einer entsprechenden Parametrierung durch den PC-Prozessor selbständig eine zyklische Datenübertragung am Feldbus durchführt und im wesentlichen aus einem ASIC besteht. Der Kommunikationsprozessor ist als Master an einem Feldbus mit zyklischer Datenübertragung nach Art des PROFIBUS DP betreibbar und hat die Funktion eines "Taktschlägers" bei der Erfassung der Prozessdaten. Weiterhin ist ein Speicher vorgesehen, in welchem die am Feldbus eingegangenen Prozessdaten abgelegt werden. Dieser Speicher hält damit ein aktuelles Prozessabbild, auf das durch den PC-Prozessor jederzeit zugegriffen werden kann. Um den PC-Prozessor von dem Pollen der eingegangenen Prozessdaten oder von dem Überwachen des Feldbuszyklus zu entlasten, ist eine Überwachungseinheit vorgesehen. Die Überwachungseinheit kann durch eine parametrierbare Hardwareschaltung realisiert werden, aber auch eine Softwarelösung durch eine Erweiterung des Kommunikationsprozessorprogramms ist möglich. Dabei besteht die Hardwareschaltung aus einem kleinen RAM, der in den Adressraum des PC-Prozessors eingegliedert ist und daher von diesem direkt adressiert werden kann, sowie aus einem programmierbaren Logikbaustein, der entsprechend einer im RAM abgelegten Parametrierung die zyklische Datenübertragung am Feldbus und/oder am Feldbus eingegangene Daten überwacht. Bei Anlauf des Steuerprogramms im Programmspeicher greift der PC-Prozessor auf das RAM zu und setzt dort die entsprechenden Bits, um die Funktion der Überwachungseinheit in der gewünschten Weise zu bestimmen. Durch diese Parametrierung wird beispielsweise festgelegt, in welchen Fällen die Überwachungseinheit einen Interrupt erzeugen soll, der über die PCI-Busanschaltung und den PCI-Bus an den PC-Prozessor weitergeleitet wird. Damit wird festgelegt, bei welchen Ereignissen der PC-Prozessor zur Weiterverarbeitung der am Feldbus eingegangenen Daten durch das Steuerprogramm veranlasst werden soll. Bei aktiver Prozesssteuerung pollt der Kommunikationsprozessor als Master fortwährend die Teilnehmer, beispielsweise Sensoren wie ein Durchfluss- bzw. ein Füllstandsmessumformer, oder Aktuatoren wie ein Zu- bzw. ein Ablaufventil an einem Tank, am Feldbus, die als Slaves betrieben werden. Wenn durch den Kommunikationsprozessor die Prozessdaten eines Slaves eingelesen wurden, will er sie in die Speicherzellen des Speichers eintragen, die für die jeweiligen Prozessdaten vorgesehen sind. Der Logikbaustein der Überwachungseinheit überprüft anhand der Adresse des Schreibzugriffs, ob bei einer Änderung der jeweiligen Prozessdaten ein Interrupt erzeugt werden muss. Diese Überprüfung ist in einfacher Weise möglich, da die Prozessdateri der einzelnen Slaves jeweils an festen Speicherplätzen innerhalb des Speichers abgelegt sind. Soll ein Interrupt bei einer Änderung der jeweiligen Daten erzeugt werden, so vergleicht ein im Logikbaustein realisierter Datenkomparator die durch den Kommunikationsprozessör auf den Bus gelegten Daten mit den früheren Prozessdaten, die durch den Logikbaustein zuvor aus dem Speicher ausgelesen wurden. Da der Vergleich der aktuell eingegangenen Daten mit den früheren Prozessdaten sowie die Interrupt-Generierung durch eine in Hardware realisierte Überwachungseinheit durchgeführt wird, ist in vorteilhafter Weise eine sehr schnelle Reaktion des Steuerungssystems auf Änderungen der Prozessdaten möglich. Nachteilig ist wieder, dass Kommunikationsprozessor und Überwachungseinheit, die für den Feldbus spezifizierten Protokolle gewährleisten müssen, komplex und damit vergleichsweise teuer sind.

Auch ist die Nutzung der (Fast)-Ethernet-Übertragungstechnik bei der Vernetzung verschiedener Kommunikationssysteme bekannt. Beispielsweise ist aus der DE 100 47 925 A1 ein Verfahren zur Echtzeitkommunikation zwischen mehreren Netzwerkteilnehmern in einem Kommunikationssystem mit Ethernet-Physik bekannt, bei dem eine Mastereinheit und ein oder mehrere Slaveeinheiten mittels über das Netzwerk übertragenen Telegrammen miteinander kommunizieren, ein zyklischer Austausch der Telegramme mit äquidistanten Abtastzeitpunkten stattfindet, indem jede Slaveeinheit auf die Mastereinheit durch eine gemeinsame Zeitbasis synchronisiert wird und eine Zugriffssteuerung für den Sendebetrieb und Empfangsbetrieb zwischen den Netzwerkteilnehmern über ein Zeitschlitz-Zugriffsverfahren erfolgt. Die Anforderungen an die Leistungsfähigkeit von Kommunikationssystemen sind in der Automatisierungstechnik, z. B. bei der Kopplung von Antriebskomponenten, besonders groß. Beim Datenaustausch zwischen Gebern, Leistungsteilen und einer Antriebsregelung ist die Datenübertragungszeit, die als Totzeit in die Regelschleife eingeht, eine besonders wichtige Größe. Je kleiner diese Totzeit ist, desto höhere Dynamik kann mit dem Regelungssystem erreicht werden. Da es in der Automatisierungstechnik sowohl auf eine hochgenaue Einhaltung der Echtzeitbedingung als auch auf eine hohe Sicherheit der Übertragung ankommt, wird die genormte Übertragungsschicht 2 (Telegrammrahmen und Zugriffsverfahren) des (Fast)-Ethernet, die diese Anforderungen nicht erfüllt, durch einen neuen Telegrammrahmen und eine neue Zugriffsteuerung vollständig neu definiert und damit die Ethernet-Physik als Basis für eine Echtzeitkommunikation zwischen beispielsweise Antriebskomponenten genutzt. Dabei kann sowohl die Kommunikation zwischen der Regelungseinheit und den Gebern und Leistungsteilen als auch die Verbindung zu einer Bewegungssteuerung realisiert werden. Um einen zyklischen Datenaustausch mit gleichen Abtastzeitpunkten realisieren zu können, wird eine gemeinsame Zeitbasis für den Master und alle Slaves hergestellt. Die Synchronisierung der Slaves auf den Master erfolgt durch speziell ausgezeichnete, zeitlich definierten Telegramme des Masters an die Slaves und individuell parametrierte Zeitzähler in den Slaves. Die Nutzdaten können in einem Telegrammrahmen transportiert werden, der neben der Slave-Adressierung und Telegrammlängeninformation die Absicherung der Datenintegrität mittels beispielsweise einer CRC-Checksumme und weitere sicherheitsrelevante Datenbereiche zur Verfügung stellt. Die Daten im Telegrammrahmen können nicht nur von einem Applikationsprozessor, sondern auch von einem Kommunikationsbaustein, ausgewertet werden, was einen zweiten Auslösekanal ermöglicht. Obwohl die zur Anwendung kommende Übertragungstechnik nach dem Ethernet-Standard prinzipiell nur Punkt-zu-Punkt-Verbindungen erlaubt, kann wie bei (Fast)-Ethernet Netzen auch durch die Verwendung von Netzknoten (sogenannte HUBs) die Bildung von Netzwerken ermöglicht werden, indem mehrere oder jeder Netzwerkteilnehmer über einen Schaltungsteil zur Bildung von Netzknoten verfügt, der zur Weiterleitung der Telegramme in Richtung einer anderen Mastereinheit oder weiterer Slaveeinheiten dient. Dadurch können auch hierarchische Netzwerke mit über Netzknoten verbundenen Punkt-zu-Punkt-Verbindungen mit Ethernet-Physik zur Durchführung einer Echtzeitkommunikation in größeren Netztopologien erstellt werden. Dieses eignet sich auch zur Vernetzung bzw. Kopplung eines verteilten Antriebssystems, indem ein erstes Kommunikationssystem eine numerische Bewegungssteuerung als Mastereinheit und mindestens eine Regelungseinheit als Slaveeinheit umfasst, wobei jede Regelungseinheit als Mastereinheit eines weiteren Kommunikationssystems dient, welches mindestens ein Leistungsteil zur Ansteuerung eines Motors und ein zugeordnetes Gebersystem als Slaveeinheiten aufweist. Über die, Fast Ethernet-Leitungstreiber innerhalb jedes Netzwerkteilnehmers und eventuelle Netzknoten gelangen die Telegramme zu den jeweiligen Protokollbausteinen, die das Telegrammprotokoll abarbeiten und in denen das Zeitschlitz-Zugriffsverfahren realisiert wird. Wenn der Protokollbausteinen unabhängig von einem Mikroprozessor der Slave-Applikation (dem eigentlichen Leistungsteil) ist, können mittels Kontroll-Bits des Telegrammrahmens bestimmte Applikationsereignisse im Slave ausgelöst werden, ohne dessen Mikroprozessor und eine entsprechende Software zu benötigen. Dies entspricht einem zweiten Auslösekanal, wie er für bestimmte sicherheitsgerichtete Anwendungen (z. B. Not-Aus etc.) gefordert ist.

Weiterhin ist aus der DE 100 04 425 A1 ein Netzwerk mit einer Mehrzahl von Netzwerkteilnehmern, beispielsweise Sensoren und Aktuatoren, bekannt, die über das Netzwerk zur Datenübertragung miteinander verbunden sind. Um eine verbesserte Genauigkeit bezüglich der Uhrzeitsynchronisation zu erreichen, enthält das erste Telegramm eine um eine Sendezeitverzögerung korrigierte Uhrzeit eines ersten Netzwerkteilnehmers, und ein zweiter Netzwerkteilnehmer ist dazu ausgebildet, die Zeitverzögerung seit Empfang des ersten Telegramms zu messen und die im ersten Telegramm empfangene Uhrzeit um die Durchlaufzeit und die Empfangszeitverzögerung zu korrigieren. Ist der zweite Netzwerkteilnehmer weiterhin dazu ausgebildet, ein zweites Telegramm zur Uhrzeitsynchronisation an einen dritten Netzwerkteilnehmer zu senden, das eine um die Laufzeit und die Verzögerungszeit zwischen Empfang des ersten Telegramms und Senden des zweiten Telegramms korrigierte empfangene Uhrzeit enthält, so wird ein iteratives Weitersenden der jeweils korrigierten Uhrzeit von Netzwerkteilnehmer zu Netzwerkteilnehmer möglich. Weiterhin können Beginn und Ende der Laufzeit eines Telegramms jeweils als der Zeitpunkt bestimmt werden, zu welchem ein charakteristisches Feld eines Telegramms mit festem Abstand vom Telegrammanfang ein Media-Independent-Interface des ersten Netzwerkteilnehmers verlässt bzw. in ein Media-Independent-Interface des zweiten Netzwerkteilnehmers einläuft. Vorteilhaft sind dabei Messungen der Sendezeitverzögerung, Laufzeit und Empfangszeitverzögerung unabhängig von der Länge des jeweiligen Telegramms. Erfüllen die Netzwerkkomponenten die Ethernet-, Fast-Ethernet- oder Gigabit-Ethernet-Spezifikatiori, so kann mit Vorteil als charakteristisches Feld des Telegramms das Type-Feld verwendet werden. Ein Netzwerkteilnehmer, insbesondere ein Feldgerät, kann mit mehreren Ports, insbesondere, vier Ports, zum Anschluss weiterer Netzwerkkomponenten ausgestattet werden. Dabei kann eine Schnittstelle, ein sogenanntes Mikroprozessor-Interface, zur Verbindung der Ports mit einem teilnehmerinternen Prozessorbus und eine Steuereinheit, eine sogenannte Switch-Control, vorgesehen werden, welche eine Telegrammweglenkung zwischen den Ports und dem Mikroprozessor-Interface vornimmt. Das hat den Vorteil, dass Netzwerkteilnehmer, insbesondere Feldgeräte, in der vom Anwender von Feldbussen gewohnten Weise in einer Linienstruktur verschaltet werden können. Ein separater Switch, wie er bei einer sternförmigen Struktur erforderlich wäre, entfällt. Die Integration von Switch-Funktiönen in den Netzwerkteilnehmer hat den Vorteil, dass insbesondere bei Ethernet die CSMA/CD-Zugriffssteuerung deaktiviert werden kann und das Netzwerk ein deterministisches Verhalten erhält. Somit wird der Einsatzbereich der Netzwerkteilnehmer und des Netzwerks auf Anwendungsfälle erweitert, in welchen Echtzeitverhalten gefordert wird. Ein Gateway zur Kopplung von Netzwerkbereichen mit verschiedener Physik und verschiedenen Protokollen ist nicht erforderlich. Die Kommunikation mit den anwendungsspezifischen Schaltungsteilen des Netzwerkteilnehmers erfolgt über einen Mikroprozessor-Bus, an welchen ein RAM, ein Mikroprozessor und ein Mikroprozessor-Interface angeschlossen sind. Aufgabe des Mikroprozessors ist die Ausführung von Anwenderprogrammen und von Kommunikationsfunktionen, beispielsweise die Abwicklung von TCP/IP. Eine weitere Aufgabe kann die Verwaltung von Sende- und Empfangslisten von Telegrammen unterschiedlicher Priorität in einem externen RAM sein. In ein ASIC der Kommunikationsschnittstelle sind weiterhin vier Ethernet-Kontroller integriert. Jeder dieser Ethernet-Kontroller trägt die Datenbytes eines vollständig empfangenen Telegramms über einen Multiplexer, einen DMA-Kontroller, der auch als DMA 2-Control bezeichnet wird, und das Mikroprozessor-Interface in eine Empfangsliste im RAM ein. Der Mikroprozessor greift auf die Empfangsliste zu und wertet die empfangenen Daten entsprechend einem Applikationsprogramm aus. Das Mikroprozessor-Interface bildet die wesentliche Schnittstelle zwischen den Ethernet-Kontrollern und dem Mikroprozessor-Bus. Es steuert oder arbitriert die Schreib- und Lesezugriffe, die über den DMA-Kontroller bzw. den DMA-Kontroller auf das RAM erfolgen. Liegen von beiden DMA-Kontrollern gleichzeitig DMA-Anforderungen vor, so entscheidet das Mikroprozessor-Interface über die Zugriffsrechte der beiden DMA-Kanäle. Über das Mikroprozessor-Interface können weiterhin durch den Mikroprozessor Parameterregister geschrieben werden, die zum Betrieb der Kommunikationsschnittstelle des Netzwerkteilnehmers erforderlich sind. Eine Einrichtung der Ethernet-Kontroller, die als Transmit-Control bezeichnet wird, enthält ein Steuerwerk, das für das Senden von Telegrammen, für Wiederholungen, Sendeabbruch usw. verantwortlich ist. Sie bildet die Schnittstelle zwischen dem internen Kontrollertakt und dem Sendetakt. Zum Speichern einer Transmit-Status-Information für niederpriore und hochpriore Telegramme ist jeweils ein Transmit-Status-Register in der Einrichtung vorgesehen. Wenn ein Telegramm fehlerfrei über den Port gesendet wurde, wird ein entsprechender Interrupt erzeugt. Das Media Independent Interface (MII) integriert den MAC-Sublayer des Layers 2 nach dem Sieben-Schichten-Modell, d. h. des Data-Link-Layer. Dieses bildet eine Schnittstelle zu einem Baustein zur physikalischen Datenübertragung. Weiterhin enthält das MII einen Transmit-Function-Block sowie einen Receive-Function-Block. Darüber hinaus sind ein MAC-Control-Block, ein Adressfilter, ein Statistikzähler und ein Host-Interface integriert. Über das MII können Steuer- und Konfigurationsdaten an den Baustein übertragen und Statusinformationen von diesem gelesen werden.

In verteilten Automatisierungssystemen, beispielsweise im Bereich Antriebstechnik, müssen bestimmte Daten zu bestimmten Zeiten (d.h. echtzeitkritische Daten) bei den dafür bestimmten Teilnehmern eintreffen und von den Empfängern verarbeitet werden. Gemäss JEC 61491, EN61491 SERCOS interface - Technische Kurzbeschreibung (http:/ / www.ser-cos.de/deutsch/index deutsch.htm) kann ein erfolgreicher echtzeitkritischer Datenverkehr der genannten Art in verteilten Automatisierungssystemen gewährleistet werden. Weiterhin sind aus der Automatisierungstechnik synchrone, getaktete Kommunikationssysteme mit Äquidistanz-Eigenschaften bekannt, wie dies beispielsweise in der DE 101 40 861 A1 für ein System und ein Verfahren zur Übertragung von Daten zwischen Datennetzen beschrieben ist. Im Einzelnen weist das erste Datennetz erste Mittel zur Übertragung von Daten in wenigstens einem ersten Übertragungszyklus auf, wobei der erste Übertragungszyklus in einen ersten Bereich zur Übertragung von echtzeitkritischen Daten und einen zweiten Bereich zur Übertragung von nichtechtzeitkritischen Daten unterteilt ist. In dem zweiten Datennetz sind zweite Mittel zur Übertragung von Daten in wenigstens einen zweiten Übertragungszyklus vorgesehen, wobei der zweite Übertragungszyklus in einen dritten Bereich zur Übertragung von echtzeitkritischen Daten und in einen vierten Bereich zur Übertragung von nichtechtzeitkritischen Daten unterteilt ist. Zur Kopplung der Datennetze mit denselben oder unterschiedlichen Kommunikationsprotokollen, z. B. Ethernet-Datennetze, insbesondere isochrone Echtzeitethernet-Kommunikationssysteme, mit PROFIBUS-Datennetzen oder isochrone Echtzeitethernet-Datennetze mit SERCOS-Datennetzen und/oder FIREWIRE-Datennetzen oder PROFIBUS-Datennetze und/oder FIREWIRE-Datennetze mit SERCOS-Datennetze ist schließlich eine Koppeleinheit (Router) zur Übertragung von echtzeitkritischen Daten des ersten Bereichs in den dritten Bereich vorgesehen. Die Möglichkeit echtzeitkritische Daten von einem Datennetz in das andere übertragen zu können, wird dazu benutzt, Zyklus-Synchronisationstelegramme von einen Taktschläger des einen Datennetzes in das andere Datennetz zu übertragen, um auch in dem anderen Datennetz lokale Relativuhren mit Hilfe der Zyklus-Synchronisationstelegrammen zu synchronisieren. Hierzu haben die unterschiedlichen Datennetze jeweils eigene Taktschläger. Aufgrund der datennetzübergreifenden Taktsynchronisation kann in jedem der Teilnehmer der Datennetze eine Relativuhr realisiert werden, die eine systemweit eindeutige Uhrzeit darstellt. Basierend auf diesem Grundmechanismus können hiermit Ereignisse in beiden Kommunikationssystemen mit einem einheitlichen Zeitverständnis erfasst werden bzw. zeitbezogene Schaltereignisse im eigenen oder dem anderen Datennetz ausgelöst werden. Die Genauigkeit der Relativuhr entspricht mindestens der Genauigkeit eines Übertragungszyklus. Der Router kann dabei als diskretes Gerät ausgebildet sein oder er kann auch integraler Bestandteil eines Teilnehmers eines der Datennetze sein, wobei auch das Routing von azyklischer bedarfsgesteuerter Kommunikation, z.B. Remote Procedure Calls (RPC), zwischen den Datennetzen möglich ist und die entsprechende Kommunikation dabei mit proprietären und/oder offenen Protokollen erfolgen kann.

Automatisierungskomponenten (z. B. Steuerungen, Antriebe) verfügen im Allgemeinen über eine Schnittstelle zu einem zyklisch getakteten Kommunikationssystem. Eine Ablaufebene der Automatisierungskomponente (Fast-cycle, z.B. Lageregelung in einer Steuerung, Drehzahl-, Drehmomentregelung eines Antriebs) ist auf den Kommunikationszyklus synchronisiert, wodurch der Kommunikationstakt festgelegt wird. Andere langsamer ablaufende Algorithmen (Slow-cycle, z.B. Temperaturregelungen) der Automatisierungskomponente können ebenfalls nur über diesen Kommunikationstakt mit anderen Komponenten (z. B. Binärschalter für Lüfter, Pumpen) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke. Demzufolge nutzen die Systemkomponenten zur Kommunikation für jede Prozess- bzw. Automatisierungsebene nur ein Kommunikationssystem bzw. einen Kommunikationszyklus (Fast-cycle) in dessen Takt alle relevanten Informationen übertragen werden. Daten, die nur im Slow-cycle benötigt werden, können z. B. über zusätzliche Protokolle gestaffelt übertragen werden, um die Anforderungen an die Bandbreite zu begrenzen. Aus der DE 101 47 421 A1 ein Verfahren zur Regelung eines ersten Teilnehmers in einem schaltbaren Datennetz von einem zweiten Teilnehmer in dem schaltbaren Datennetz bekannt, bei dem der Regelkreis über das schaltbare Datennetz geschlossen wird. Hierzu erfolgt die Kommunikation zwischen Teilnehmern des schaltbaren Datennetzes über eine oder mehrere Punkt-zu-Punkt Verbindungen in zueinander synchronen Übertragungszyklen. Für die Kommunikation von Ist- und Soll-Werten bzw. von Stellgrößen über das Datennetz wird dabei der echtzeitfähige Bereich der Übertragungszyklen genutzt und die Kommunikation der für die Regelung erforderlichen Datentelegramme erfolgt innerhalb determinierter Zeitfenster. Weiterhin kann auch ein Leitwert über das schaltbare Datennetz übertragen werden, welcher von einem der Teilnehmer des Datennetzes für einen oder mehrere Teilnehmer des Datennetzes generiert wird. Hierbei kann es sich beispielsweise um die Erfassung eines Ist-Werts einer Achse, das heißt, einer so genannten Master-Achse, einer Anlage handeln. Aufgrund dieses Ist-Werts wird von dem betreffenden Teilnehmer ein Leitwert generiert, der für die Steuerung von so genannten Slave-Achsen verwendet wird. Die Funktionalität einer solchen Steuerung, beispielsweise eine speicherprogrammierbare Steuerung, eine Motion-Control-Steuerung oder eine numerische Steuerung, kann auch in einem Antrieb integriert sein. Neben der Kopplung einer Eingabe/Ausgabe-Station an eine Steuereinheit kann auch eine Relativuhr in einem der Teilnehmer generiert werden. Die Relativuhr wird von einer Master-Uhr generiert und zyklisch im Netzwerk verteilt und sorgt dafür, dass alle im Datennetzwerk beteiligten Teilnehmer über eine gleich eingestellte Uhrzeit verfügen. Die Zeitbasis für die Relativuhr ist dabei durch die synchronen Übertragungszyklen und/oder die Unterteilung der Übertragungszyklen in Zeitschlitze gegeben. Basierend auf dieser gemeinsamen Uhrzeit können Ereignisse mit Uhrzeitstempeln erfasst werden (z.B. Flankenerkennung von digitalen I/O's) bzw. Schaltvorgänge (z. B. Schalten von digitalen/analogen Ausgängen) mit einem entsprechenden Zeitstempel versehen werden und die Schaltausgabe basierend auf dieser gemeinsamen Relativzeit ausgeführt werden. Innerhalb der Echtzeitkommunikation gibt es potentiell mehrere Kommunikationszyklen, um unterschiedliche "quality of Services" zu realisieren, wie beispielsweise: 1ms-Zyklus für Gleichlaufverbindung (Leitwert über Bus), Drehzahlsoll-/Lagesoll-/I/O-Schnittstelle für zeitkritische Achsen, Fast I/O-Ankopplung oder 4ms-Zyklus für zeitunkritische Achsen (Frequenzumrichter, einfache Positionierachsen), Applikationsdaten z.B.: Not-Aus-Steuerung, Verteiltes Schieberegister (Produktverfolgung), Ansteuerung (z. B. Betriebsarten) in verteilten Systemen, Vorgabe von neuen Bohraufträgen (z. B. Bohrtiefe) bei Bohrautomaten oder asynchroner und/oder event-gesteuerter Zyklus für Projektierungs-Daten und -Ereignisse oder Daten und Routinen für Fehlerhandling und Diagnose.

Um ein Verfahren zum Aufbau eines auf Ethernet basierenden Kommunikationssystems für die Industrieautomation bereitzustellen, das ein im wesentlichen determinierbares Kommunikationsverhalten, Reaktionszeiten im unteren Millisekundenbereich und niedrige Kosten der Kommunikationsknoten aufweist, ist schließlich aus der DE 100 55 066 A1 ein Verfahren zum multidirektionalen Austausch von Informationen zwischen Teilnehmern (z.B. Automatisierungsgeräte) bekannt, bei dem je nach Größe des gesendeten Ethernet-Datenpaketes (Telegramm), dieses in mehrere kleinere Pakete (Kurztelegramme) zerlegt und diesen jeweils mindestens eine Steuerinformation hinzugefügt wird, die kleineren Pakete in mehreren Zyklen an ihr Ziel übertragen werden und gegebenenfalls dort mittels der Steuerinformationen zum ursprünglichen Ethernet-Datenpaket wieder zusammengesetzt werden. Dabei werden alle Telegramme, deren Länge größer als die der Kurztelegramme ist, zerlegt und alle Kurztelegramme besitzen die gleiche fest eingestellte Größe. Der Steuerinformation sind die Quelle und das Ziel des Kurztelegramms, ob es sich um ein zerlegtes oder unzerlegtes Telegramm handelt, in wieviele Kurztelegramme zerlegt wurde und die lau-fende Nummer des Kurztelegramms entnehmbar. Zum multidirektionalen Austausch von Informationen zwischen Teilnehmern (z. B. Automatisierungsgeräte), wobei einem Industrial Domain Switch (IDS) ein Teilnehmer zuweisbar ist, welcher mit dem IDS über einen Ethernet-Anschluss verbunden ist, sind die IDS über einen ethernetkonformen Anschluss als Netzwerk aufgebaut und jeder IDS erhält nach einem vorgegebenen, zyklischen Regelwerk zeitlich determiniert ein Senderecht. Eine Senderechtsvergabe wird beim Start des Systems bzw. Neustart (Power On oder Reset) über eine Managementfunktion mittels Managementtelegramme, wobei die IDS erkennen, dass es sich um Managementtelegramme handelt, zwischen den IDS ausgehandelt. Die gesamte Steuerlogik des IDS kann in einem hochintegrierten elektronischen Baustein integriert werden.

Schließlich ist aus der US 2001/0014833 A1 ein Programmregler bekannt, der mit einem privaten Betriebssystem versehen ist, welches nicht das TCP/IP-Protokoll unterstützt, sich jedoch für Automatisierungsprogramme eignet, und der einerseits mit mindestens einem intelligenten Modul, in dem ein HTTP-Server installiert ist, und andererseits mit einem Kommunikationsmodul, das über einen Bus mit entfernten Einrichtungen kombiniert werden kann, ausgestattet ist. Um einem intelligenten Modul die Möglichkeit zu geben, eine Clientfunktion oder eine Serverfunktion ablaufen zu lassen, oder Mitglied einer Multicastgruppe zu sein, indem die TCP/IP-Dienste eines Kommunikationsmoduls der Konfiguration des Programmreglers verwendet werden, ist das intelligente Modul mit einer Anwendungsprogrammierschnittstelle versehen, die es ermöglicht, entfernt die Anschluss- und Kommunikationsfunktionen des TCP/IPartigen Kommunikationsmoduls zu verwenden. Die Software-Architektur des Kommunikationsmoduls besteht aus einem Server-Delegationsdienst, der es einer Automatisierungsfunktion eines intelligenten Moduls erlaubt, einem Modul die Eröffnung und Verwaltung einer Serververbindung auf dem TCP/IP-artigen Netzwerk zu delegieren, einem Client-Delegationsdienst, der es einer Automatisierungsfunktion eines intelligenten Moduls erlaubt, dem Modul die Eröffnung und Verwaltung einer Clientverbindung auf dem TCP/IP-artigen Netzwerk zu delegieren, einem Multicast-Delegationsdienst, der es einer Automatisierungsfunktion eines intelligenten Moduls erlaubt, dem Modul die Eröffnung und Verwaltung einer Multicastverbindung auf dem TCP/IP-artigen Netzwerk zu delegieren und einem Kodier-/Dekodier- und Verteilerdienst.

Wie die vorstehende Würdigung des Standes der Technik aufzeigt, werden in der Automatisierungstechnik zur Kommunikation zwischen den einzelnen Geräten verschiedene Schnittstellen mit ihren physikalischen Eigenschaften und Übertragungsprotokolle definiert und in internationale Normen eingebracht oder etablieren sich als Industriestandards. Diese Systeme werden allgemein als Feldbussystem bezeichnet, wobei auch die Ethernet-basierten Technologien dazu zu zählen sind. Die Schnittstellen sind in Form von dedizierten Kommunikations-Controllern, zum Teil mit CPU als integrierte Schaltkreise (Kommunikations-Prozessor) aufgebaut, siehe beispielsweise DE 198 31 405 (ASIC: ASPC2), DE 299 07 909 (ASIC: SPC3), DE 199 28 517 C2 (ASIC: SUPI), DE 100 04 425 A1. Ebenso wird das gesamte Interface oft als auswechselbares Modul aufgebaut, bestehend aus Steckverbinder, physikalischem Interface, dedizierter Kommunikations-Controller, Mikroprozessor mit Speicher und Übergabelogik zur CPU des Automatisierungsgeräts in der Regel ein Dual-port Memory. Dieses Modul realisiert genau ein spezielles Übertragungsprotokoll und muss in der Gesamtheit darauf speziell entwickelt werden. In der Regel enthält der Kommunikations-Prozessor jeweils nur einen speziellen Kommunikations-Controller für ein spezielles Feldbussystem, wobei es mittlerweile auch Schaltkreise gibt, die mehrere dieser dedizierten Kommunikations-Controller enthalten, wie dies beispielsweise in der US-Patentanmeldung 09/780,979 für einen Kommunikations-Controller nach dem CAN-Standard und einen Kommunikations-Controller nach dem Ethernet -Standard beschrieben ist. Dabei sind in der Regel spezielle Hard- und Softwarekomponenenten mit einer Reihe von teueren, für die Kommunikation speziell ausgelegten Komponenten, wie HUB und Leitungstreiber, Ethernet-Controller, Media Interpent Interface für die Verbindung zu einem anderen Netz (öffentliches Datennetz, anderes LAN oder einem Hostsystem), Feldbus-Schnittstellen bzw. Sensorbus-Schnittstelle, insbesondere Serial Peripheral Interface mit Master- bzw. Slave-Protokollchips, sowie die Umsetzung entsprechender Netzwerk-Zugangsprotokolle, z.B. CSMA/CD (Carrier Sense Multiple Access/Collision Detection), Token-Passing (Bitmuster als Berechtigungsmarke) oder TCP/IP (Transmission Control Protocol/Internet Protocol) in für den Feldbus spezifizierte Protokolle erforderlich. Wenig Beachtung findet jedoch die Entwicklung eines solchen Schaltkreises oder einer Kommunikationsschnittstelle unabhängig von einem speziellen Feldbussystem, um darauf basierend eine individuelle und komfortable Anpassung der Kommunikationsfunktionen zu ermöglichen. Deshalb fehlen in der Praxis kostengünstige Verfahren und Kommunikationsschnittstellen für ein in Echtzeit betreibbares Automatisierungssystem, welches eine individuelle, insbesondere automatisch anpassbare, interaktive Kommunikation sicherstellt oder eine einfache Austauschbarkeit ermöglicht bzw. Funktionsbausteine für ein in Echtzeit betreibbares Automatisierungssystem, welches auch ohne zusätzliche Hardware-Funktionsmodule und ohne aufwendige Schnittstellenanpassungen schnell und wirtschaftlich anspruchsvolle Automatisierungslösungen aufbauen. Besonders bedeutsam ist dies, weil die Telekommunikations- und Computerindustrie, insbesondere auf dem Gebiet der Automatisierungs- und Antriebstechnik, als äußerst fortschrittliche, entwicklungsfreudige Industrien anzusehen sind, die schnell Verbesserungen und Vereinfachungen aufgreifen und in die Tat umsetzen.

Der Erfindung liegt die Aufgabe zugrunde, ein Verfahren und eine Vorrichtung zur Datenkommunikation und Konfiguration von Busteilnehmern eines offenen Automatisierungssystems derart auszugestalten, dass der Anschluss beliebiger Busteilnehmer mit individueller, interaktiver Kommunikation ermöglicht wird. Eine weitere Aufgaben besteht darin, die Austauschbarkeit von Teilen der Vorrichtung zu ermöglichen.
- Diese Aufgabe wird erfindungsgemäß durch ein Verfahren zur Datenkommunikation und Konfiguration von Busteilnehmern eines offenen Automatisierungssystems mit verteilter Steuerung, welche über einen mindestens einen Kommunikations-Controller gemäß Patentanspruch 1.

Das erfindungsgemäße Verfahren ermöglicht auf einfache Art und Weise den Aufbau eines "quasi dezidierten" Kommunikations-Controllers, indem dieser als eine bzw. mehrere frei programmierbare Kommunikations-ALUs (Arithmetik and Logic Unit) aufgebaut wird, welche einen auf die Kommunikationsaufgaben optimierten Befehlssatz und Hardwarearchitektur besitzt. Damit ergeben sich für die erfindungsgemäße Lösung folgende Vorteile:
- Die Entwicklung, Produktion und Vertrieb eines solchen Schaltkreises kann unabhängig von einem speziellen Feldbussystem/Ethernet erfolgen.
- Erweiterungen innerhalb der Feldbus-/Ethernet- und im Besonderen Real-Time-Ethernetspezifikation oder Implementierungen komplett neuer Feldbussysteme können per Softwareupdate erfolgen und benötigen keinen neuen Schaltkreis.
- Besonders bei zwei oder mehreren Kommunikationsschnittstellen innerhalb eines Schaltkreises werden die jeweiligen Feldbus-/Ethernetsysteme durch Laden der Software festgelegt und sind damit völlig flexibel kombinierbar.

Weiterhin wird diese Aufgabe durch eine Vorrichtung zur Datenkommunikation gemäß Patentanspruch 9.

Im Vergleich zum Aufbau eines dedizierten Kommunikations-Controller durch Programmierung von FPGAs (Field programmable Gate Array) oder Teile davon nach dem Stand der Technik, welcher ebenfalls eine fest verdrahteten Logik entspricht, weist die erfindungsgemäße Vorrichtung die oben beschriebenen Vorteile auf. Weiterhin werden im Gegensatz zu herkömmlichen ALUs die Befehle in einem Takt parallel ausgeführt. Dazu sind erfindungsgemäß die zugehörigen Logikfunktionsblöcke in den ALUs parallel angeordnet und können gleichzeitig den Befehlscode verarbeiten, wodurch auch bei hohen Baudraten, z.B. 100 MHz Ethernet, die notwendigen Funktionen realisiert werden können.

Eine Vorrichtung zur Datenverarbeitung von auf einer Übertragungsleitung bitseriell übertragbaren Daten, die entsprechend einem vorgegebenen Protokoll zur Datenübermittlung seriell übertragen und innerhalb einer Schnittstelle vor einer Übertragung als Datenwort parallel verfügbar bzw. nach einer Übertragung als paralleles Datenwort rekonstruierbar sind und bei der in einem Bit-Takt eines Systemtaktes mehrere Befehle ausgeführt werden, ist ansich aus der DE 42 20 258 C2 bekannt. Im einzelnen ist für eine Adaption an ein jeweils vorgebbares Übertragungsprotokoll eine Bitverarbeitungseinheit vorgesehen, die aus wahlweise ansteuerbaren Umsetzungselementen besteht, welche die einzelnen Datenbits gemäß einer jeweiligen Protokollkonvention verarbeiten und von einem Steuerwerk koordiniert sind. Die Bitverarbeitungseinheit weist mindestens einen Vergleicher für sequentiell aufeinander folgende Datenbits auf, dessen Ausgangssignal an das Steuerwerk abgegeben wird. Weiterhin ist zwischen der Übertragungsleitung und der Bitverarbeitungseinheit ein Kopplungselement angeordnet, welches als eine Dekodierungseinheit oder als eine Kodierungseinheit für die auszugebenden Daten ausgebildet ist. Zur Erhöhung der Arbeitsgeschwindigkeit bei zeitlich verschachtelt durchzuführenden Kommunikationsabläufen und Verarbeitungsabläufen ist vorgesehen, dass die Bitverarbeitungseinheit, das Kopplungselement sowie zwei umschaltbare und über das Steuerwerk wahlweise aktivierbare Arbeitsspeicher an einen internen Bus angeschlossen sind. Weiterhin ist zur Veränderung der Bitreihenfolge in Abhängigkeit von einer jeweils vorgegebenen Protokollstruktur vorgesehen, dass eines der Umsetzungselemente der Bitverarbeitungsemheit als ein Bitvertauscher ausgebildet ist. Insbesondere bei Protokollen mit unterschiedlichen Reihenfolgen der Wertigkeit der Bits ist vorgesehen, dass der Bitvertauscher zur Realisierung einer Spiegelung der innerhalb eines Datenwortes angeordneten Bits an einer Wortmitte ausgebildet ist. Eines der Umsetzungselemente der Bitverarbeitungseinheit ist als eine Sortiervorrichtung ausgebildet, wodurch es möglich ist, ein serielles Bit an eine beliebige Stelle eines Datenwortes einzublenden. Zur Gewährleistung einer ausreichend hohen Verarbeitungsgeschwindigkeit, die beispielsweise im Bereich von 1 Mbit/s liegen kann, werden die Umsetzungselemente im wesentlichen schaltungstechnisch realisiert. Im Gegensatz dazu können bei der erfindungsgemäßen Vorrichtung - infolge des flexiblen Befehlssatzes und der zugehörigen Logikfunktionsblöcke - in einem wesentlich höheren Systemtakt, nämlich von 100 MHz, und ereignisgesteuert mehrere Teilaufgaben parallel gelöst werden, wodurch protokollunabhängig eine hohe Verarbeitungsgeschwindigkeit erreicht wird. Beim Gegenstand der DE 42 20 258 C2 ist also, wie beim Stand der Technik, eine spezielle Kommunikationslösung für die Übertragung von Daten am Data Link Layer (Schicht 2) entwickelt worden, ohne höhere Netzwerkschichten und anwendungsnahe Services, wie Konfiguration von Parametern oder Netzwerk-Management, zu berücksichtigen. Bei den Büro- und Heimanwendungen gemäß der IEEE 802.11 spielt es in der Regel keine Rolle, ob die Datenübertragung bei höherer Netzlast mal stockt und ein Telegramm wiederholt werden muss. In der Automatisierungstechnik muss der zyklische Datenaustausch mit den einzelnen Teilnehmern (Geräte) sichergestellt werden, d.h. innerhalb einer definierten Zeit muss also eine festgelegte Datenmenge übertragen werden. Durch die erfindungsgemäße Lösung ist auch die Übertragung zeitkritischer Daten sichergestellt, so dass eine hohe Dienstgüte (Quality of Service QoS) und auch eine Netzwerk-Migration, beispielsweise einen CAN-Bus auf eine bis zu hundertmal schnellere Ethernet-Umgebung zu migrieren, ermöglicht wird. Weiterhin kann in vorteilhafter Weise die Initialisierung neuer und der Austausch fehlerhafter Geräte durch Plug- & Play verwirklicht werden und die flexiblen Kommunikations-Mechanismen ermöglichen den einfachen Einsatz in vielen Anwendungsfällen und Systemarchitekturen. Ein Gateway, welches die Anwendungsdaten umformatieren muss, d.h. ein Gerät, welches die Dienste einer Anwendungsschicht (Application Layer) in die andere Anwendungsschicht übersetzt, was insbesondere bei Bit-orientierten Daten zu einem hohen Aufwand führt, ist bei der erfindungsgemäßen Lösung nicht erforderlich. Die Verbindung zwischen Bussystem und Netzwerk erfolgt bei der erfindungsgemäßen Lösung durch Umsetzung auf der Datenverbindungsschicht (Data link layer), wodurch beispielsweise CAN- Nachrichten in Ethernet-Nachrichten übersetzt werden können, da die höheren Protokolle (Anwendungsschicht) identisch sind. Insbesondere können bei der erfindungsgemäßen Lösung nicht nur Master/Slave-Systeme sondern auch verteilte Steuerungen, welche zumindest partiell nicht-hierarchische Netzwerkarchitektur mit Durchlässigkeit in beide Richtungen erfordern, realisiert werden.

In Weiterbildung der Erfindung sind, gemäß Patentanspruch 13, im Kommunikations-Prozessor mehrere der frei programmierbaren Kommunikations-Controller mit jeweils einer diesen zugeordneten physikalischen Schnittstelle enthalten.

Diese Weiterbildung der Erfindung weist den Vorteil auf, dass man im Vergleich zum Stand der Technik für jeden Kanal den im Austauschmodul benötigten Mikroprozessor und die zugehörige Infrastruktur wie Speicher und Dual-port Memory einspart.

Bei einer bevorzugten Ausgestaltung der Erfindung ist, gemäß Patentanspruch 16, die physikalische Schnittstelle als gedruckte Schaltung mit einem Anschlussstecker eines Kommunikationsnetzwerkes oder mit einem Anschlussstecker eines Kommunikationsnetzwerkes als eine integrierte Einheit ausgestaltet und dass der Kommunikations-Prozessor sowohl eine Applikation als auch ein Übertragungsprotokoll abarbeitet.

Diese Ausgestaltung der Erfindung weist den Vorteil auf, dass auf Grund der kleinen Abmessungen des physikalischen Interface, dieses direkt als gedruckte Schaltung am Übergabestecker des Leitungsanschluss ausgeführt werden kann. Heutige Mikroprozessoren sind so leistungsfähig, dass sie sowohl die Applikation als auch das Übertragungsprotokoll abarbeiten können. Damit erspart man sich auf vorteilhafte Weise einen zweiten Mikroprozessor und die zugehörige Infrastruktur wie Speicher und Dual-port Memory im Austauschmodul.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- **FIG. 1**: das Blockschaltbild eines Kommunikations-Prozessors mit frei programmierbaren Kommunikations-Controller,
- **FIG. 2**: das Blockschaltbild eines frei programmierbaren Kommunikations-Controllers für einen Kommunikations- Prozessor gemäß **FIG. 1**,
- **FIG. 3**: ein Beispiel für einen Befehlscode gemäß der Erfindung und
- **FIG. 4**: das Blockschaltbild eines Automatisierungsgerät mit flexibler Kommunikationsstruktur gemäß der Erfindung.

In der Automatisierungstechnik sind seit Jahren verschiedene Kommunikationssysteme mit standardisierten Kommunikationsdiensten und Protokollen, mit denen man zwischen heterogenen und homogenen Netzwerken kommunizieren kann, im Einsatz. In der untersten Ebene sind beispielsweise einfache Sensor-Aktuator-Bussysteme oder Rückwandbussysteme (z.B. auf handelsüblichen Norm-Tragschienen anbringbare modulare Ein-/Ausgabe-Geräte), in der mittleren Ebene "eingebettete" Netzwerke zur Steuerung der Maschinen (welche programmierbare Steuerungen, komplexe elektrische und hydraulische Antriebsgeräte, Ein-/Ausgabe-Geräte, Datenerfassungsgeräte oder Mensch/Maschine-Schnittstellen verbinden) und in der obersten Ebene die Netzwerke zur Fabrikautomation angeordnet. Bei der erfindungsgemäßen Lösung liegt in Hinblick auf die Kommunikationsbeziehungen ein einheitliches logisches Netzwerk vor, so dass eine scharfe Trennlinie zwischen der Technik in herkömmlichen Telekommunikationsnetzen, ' welche nachfolgend beschrieben wird, und (Computer)-Datennetzen nicht mehr gezogen werden kann.

In der Telekommunikationstechnik erfolgt die Übermittelung kontinuierlicher Datenströme, z.B. Sprach- oder Videokommunikation, in der Regel über paketvermittelnde Kommunikationsnetze, wie z.B. LANs (Local Area Networks), MANs (Metropolitan Area Networks) oder WANs (Wide Area Networks). Zunehmend wird auch die ADSL-Technik (Asymmetrie Digital Subscriber Line, asymmetrisches DSL-Datenübertragungsverfahren) genutzt. Neben der ADSL-Technik sind auch andere DSL-Techniken gebräuchlich, beispielsweise HDSL = High Data Rate Digital Subscriber Line; SDSL = Single Line Digital Subscriber Line; MDSL = Multirate Digital Subscriber Line; RADSL = Low Rate Adaptive Digital Subscriber Line und VDSL = Very High Rate Digital Subscriber Line, die jede für den Anwendungsfall optimiert sind und unter dem Oberbegriff xDSL-Übertragungstechnik zusammengefasst werden. Die Kommunikation erfolgt über Verbindungen ganz unterschiedlicher Bandbreite, d.h. beispielsweise 56 KBit Analoganschluss oder 64 KBit -ISDN oder DSL oder - soweit in einem LAN eingebunden - über 100 MBit Twisted Pair-Leitung, oder über Wähl-Verbindungen 2 MBit und besser, oder über Standleitungen X.25. Dementsprechend ist eine ganze Vielzahl von Schnittstelleneinrichtungen bekannt, beispielsweise
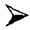 ISDN S₀ - Schnittstellen,
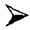 LAN-Interface FE (mit Programmspeicher) zum PCI-Bus,
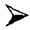 externes LAN-Interface LAN (mit Programmspeicher) als 10/100 Mbit/s Ethernet oder Token-Ring,
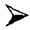 WAN-Schnittstellen WAN: X.21, V.35, G.703/704 bis 2 Mbit/s.

Dabei werden alle Interaktionen des Benutzers durch Events dem Dialog zwischen dem Benutzer und einem Dialogserver zugeführt, wobei in einer Dialogsteuerung DE die Session-ID als Zugangsberechtigung abgespeichert ist. Das Hardware-Konzept des Dialogservers muss auf die vielfältigen, gewachsenen Anschlussnormen im weltweiten Netzwerkbetrieb angepasst werden. Speziell angepasste LAN-Module mit wahlweise BNC-, AUI-, LWL- oder Twisted Pair-Anschlüssen verbinden den Dialogserver mit lokalen Token-Ring- und Ethernet-Netzwerken. Die Zugänge zu den Weitverkehrsnetzen (z.B. ISDN, X.25) und Standleitungen werden mit zum Teil mehrkanaligen WAN-Adaptern (S_{O}, U_{PO}, U_{KO}, X.21, V.24, V.35) geschaffen. Für die optimale Performance können aktive WAN-Adapter eingesetzt werden. Im ISDN-Bereich sind die Protokolle DSS1, iTR6, N1-1, sowie Fetex 150 verfügbar.

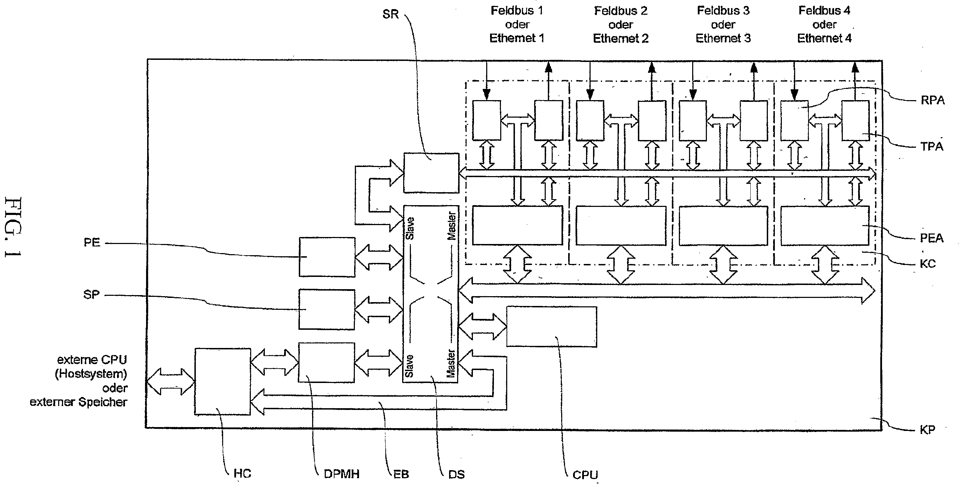

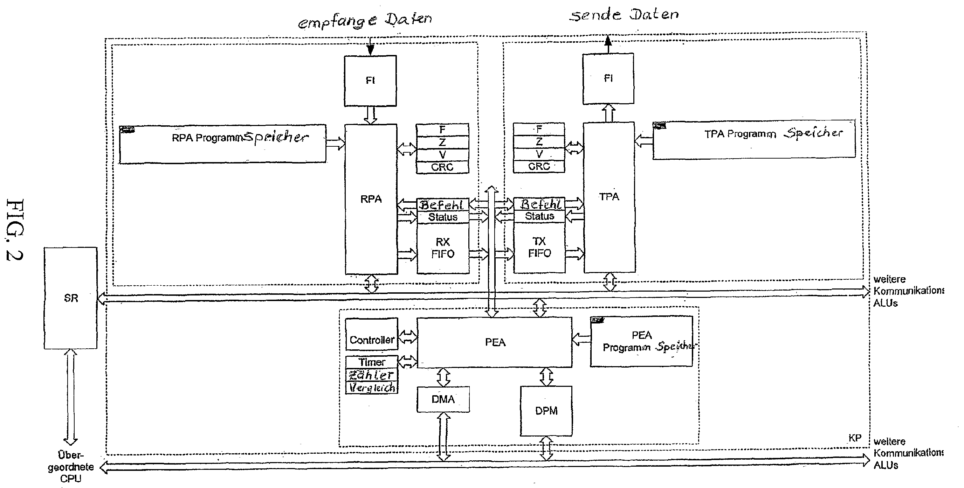

Bei der in FIG. 1 dargestellten erfindungsgemäßen Lösung sind die Schnittstellen in Form eines frei programmierbaren Kommunikations-Controllers KC aufgebaut. Erfindungsgemäß besteht dieser aus drei Kommunikations-ALUs, welche im Einzelnen in FIG. 2 dargestellt sind, nämlich:
- die Receive Processing ALU (RPA), welche die Aufgabe hat entsprechend der Übertragungsrate den empfangenen Bit- bzw. Nibble (halbes Byte) seriellen Datenstrom zu dekodieren und in eine parallele Darstellung (z.B. Byte, Wort oder Doppelwort) zu konvertieren,
- die Transmitt Processing ALU (TPA), welche die Aufgabe hat Daten aus einer parallelen Darstellung in Bit- bzw. Nibble seriellen Datenstrom zu kodieren und mit der richtigen Übertragungsrate auf die Leitung zu geben und
- die Protocol Excecution ALU (PEA), welche den Sende- und Empfangsverlauf eines zusammengehörigen Datenpakets steuert.

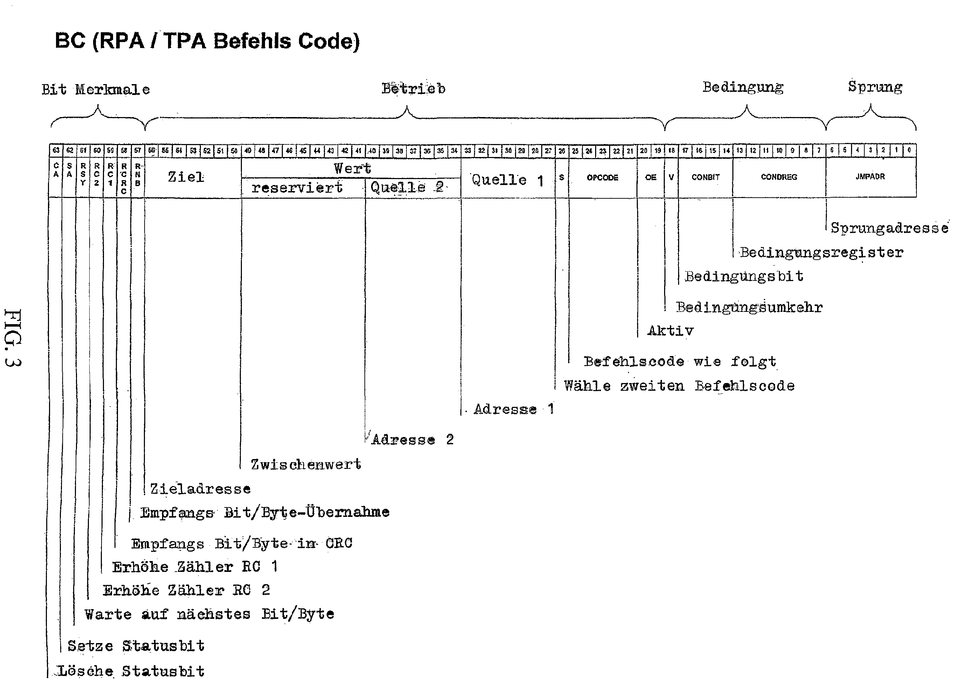

Um auch bei hohen Baudraten, z.B. 100 MHz Ethernet, die notwendigen Funktionen realisieren zu können, werden durch die erfindungsgemäße Lösung folgende Anforderungen erfüllt:
- Die Kommunikations-ALUs RPA und TPA können mehrere Befehle parallel ausführen. Dazu wird erfindungsgemäß ein breiter Befehlscode BC (siehe FIG. 3) benutzt, z.B. 64 Bit, in dem mehrere Befehle (siehe FIG. 3: die sieben höchstwertigsten Bits, Operation, Condition, Jump) kodiert sind. Dies können z.B. logische Operationen, Programmsprünge, Setzen und Löschen von Bits in den Flags F, Inkrementieren und Dekrementieren von Zählern, Transfer von Daten und Bedienen von speziellen Funktionsregistern sein. Im Gegensatz zu herkömmlichen ALUs werden diese Befehle in einem Takt parallel ausgeführt. Dazu sind erfindungsgemäß die zugehörigen Logikfunktionsblöcke in den Kommunikations-ALUs parallel angeordnet und können gleichzeitig den Befehlscode BC verarbeiten.
- Die Kommunikations-ALUs RPA und TPA verfügen über spezielle Funktionsregister, die ebenfalls parallel auf die zu verarbeitenden Daten wirken. Im einzelnen sind dies:
   - Schieberegister FI, in die die seriellen Daten automatisch rein- bzw. rausgeschoben werden und das Einfügen und Löschen von Bits an beliebigen Positionen ermöglichen,
   - Zähler Z, welche die seriellen Daten automatisch mitzählen und Vergleichsregister, welche bei Gleichheit ein Bit setzen,
   - Vergleichsregister V, welche die serielle Daten auf bestimmte Bitmuster vergleichen und bei Gleichheit ein Bit in den Flags F setzen,
   - CRC-Generatoren CRC, welche aus den bitseriellen Daten selbständig CRC-Polynome berechnen,
- Die Kommunikations-ALU PEA überwacht im Gegensatz zu herkömmlichen ALUs eine Vielzahl von speziellen Ereignissen per Hardware parallel. Dies kann z.B.:
   - die Übergabe bestimmter Daten von der RPA bzw. zur TPA bzw. zur übergeordneten CPU,
   - das Ablaufen von Zeiten,
   - das Erreichen bestimmter Zählerstände oder
   - das Setzen bestimmter Zustandsbits sein.
      Wenn eines oder eine bestimmte Kombination von Ereignissen eingetreten ist, reagiert die Kommunikations-ALU PEA innerhalb eines Systemtakts durch Abarbeitung eines dem Ereignis zugeordneten Stück Programmcodes.
- Die Kommunikations-ALU PEA ist ferner in der Lage innerhalb eines Systemtakts:
   - einen Date aus einem lokalen Dual Port Memory DPM zu lesen,
   - zu verarbeiten und
   - an die Kommunikations-ALU TPA zu übergeben
      bzw. von der Kommunikations-ALU RPA
   - entgegen zu nehmen,
   - zu verarbeiten und
   - in das lokale Dual Port Memory DPM abzulegen.
- Der Zugriff auf das lokale Dual Port Memory DPM erfolgt über zwei Register zweifach indiziert, um in einem Systemtakt auf die in der Kommunikationstechnik üblichen Datenstrukturen direkt zugreifen zu können.
- Die Schnittstelle zwischen den Kommunikations-ALUs PEA und der RPA bzw. TPA ist erfindungsgemäß als FIFO ausgeprägt, um ein- bzw. ausgehende Daten zwischen zu speichern.
- Die Schnittstelle zwischen dem Kommunikations-Controller KC und einer übergeordneten Steuereinrichtung CPU ist erfindungsgemäß als DMA-Controller DMA zur schnellen Übertragung von großen Datenmengen als auch als Dual-port Memory DPM zum Führen von Statusvariablen als auch als gemeinsamer Registersatz SR zur Synchronisation ausgeprägt.
- Erfindungsgemäß ist, um die Kommunikations-ALUs PEA, RPA bzw. TPA untereinander zu synchronisieren, ein Satz gemeinsamer Register SR vorgesehen auf die jede Kommunikations-ALU PEA, RPA bzw. TPA schreiben als auch lesen kann.
- Auf die gemeinsamen Register SR kann auch die übergeordnete Steuereinrichtung CPU zugreifen, um den Kommunikationsstatus zu monitoren bzw. zu steuern.

Weitere Funktionen der Kommunikations-ALU TPA, welche per Software bei Ethernet-Protokollen realisiert sind: Abbilden der zu sendenden Bytes, Erkennen von Kollisionen im Halbduplexbetrieb und Ausführen eines Back-Off-Algorithmus, Zurverfügungstellen von Transmit-Status-Informationen an die Kommunikations-ALU PEA nach Beenden eines Sendevorganges, Einhalten der Ruhezeit Inter-Packet-Gap (IPG) zwischen zwei Telegrammen, Ergänzen der Sendedaten um eine Präambel, einen Start-Off-Frame-Delimeter (SFD) und ein parametrierbares Cyclic-Redundancy-Check-Wort (CRC), Auffüllen eines Telegramms mit Pad-Bytes, wenn die Telegrammlänge < 60 Byte wäre, und ein Abbrechen eines Sendevorgangs auf Anforderung. Weitere Funktionen der Kommunikations-ALU RPA sind: die empfangenen Bytes der Kommunikations-ALU PEA zur Verfügung zu stellen, Erkennen des Start-Of-Frame-Delimeter und eines VLAN-Frame (Virtuell- LAN), Überprüfen des Längenfelds und des CRC-Worts in Telegrammen, nach Beendigung des Empfangsvorgangs Receive-Status-Informationen der Kommunikations-ALU PEA zur Verfügung zu stellen sowie Entfernen bei Telegrammen von Präambel und Start-Of-Frame-Delimeter.

Diese Kommunikations-ALUs PEA, RPA bzw. TPA arbeiten mit der übergeordneten Steuereinrichtung CPU zusammen, welche mit im Schaltkreis integriert aber auch extern angeordnet sein kann. Ist die übergeordnete Steuereinrichtung CPU integriert, kann der Schaltkreis die Kommunikationsfunktionen ausführen und enthält dann zur Ankopplung an eine externe Steuereinrichtung (Hostsystem) das Dual-port Memory DPMH oder er führt neben der Kommunikation die gesamte Applikation aus und hat dann zum Anschluss von externem Speicher und Peripheriebausteinen den internen Systembus als Extension Bus EB rausgeführt. Vorzugsweise ist eine Hostschnittstelleneinrichtung mit einem an Adress-, Daten- Steuerbusleitungen angeschlossen Hoststeuereinrichtung HC vorgesehen, welche zwischen einem Erweiterungsbus EB zum Anschluss von Speicher und Peripheriebausteinen und dem Dual-port Memory DPMH zum Anschluss einer weiteren übergeordneten Steuereinrichtung umschaltbar ist. Es bietet sich an für beide Betriebsarten die gleichen Signale zu benutzen und diese per Software umzuschalten. Dabei können der Registersatz SR und das Dual-port Memory DPM der Kommunikations-ALUs RPA, TPA, PEA parallel zum laufenden Betrieb von der übergeordneten Steuereinrichtung (CPU) gelesen und beschrieben werden, so dass eine, industrielle Echtzeit-Ethernet-Lösung mit Netzwerkzyklen und Präzision im Mikrosekundenbereich ermöglicht wird, welche keine Unterstützung durch proprietäre Hardwarekomponenten oder ASICs benötigt. Dies gilt auch für die Optimierung und Anpassung der Echtzeit-Übertragung, wie Anpassung an die Anforderungen der Anwendung, des Systems und der Kommunikations-Architektur, so dass ein durchgängiger Datenzugriff von der Management- bis zur Feldebene gewährleistet ist.

Wie in FIG. 1 dargestellt, enthält die erfindungemäße Vorrichtung auch einen Data Switch DS, welcher beispielsweise eine 32-Bit Steuereinrichtung CPU und die anderen Kommunikations-ALUs PEA (wobei in FIG. 1 vier getrennte Kommunikations-Controller KC dargestellt sind) mit einem Speicher SP, der internen Peripherie; PE und einem der Hoststeuereinrichtung HC zugeordneten Dual-port Memory DPMH verbindet. Der Data Switch DS vermeidet den aus anderen Kommunikations-Prozessoren bekannten "Flaschenhals" eines gemeinsamen Busses, indem er den gleichzeitigen Zugriff der Masterports über die verschiedenen Slaveports (im Beispielsfall zwei) auf die Daten ermöglicht.

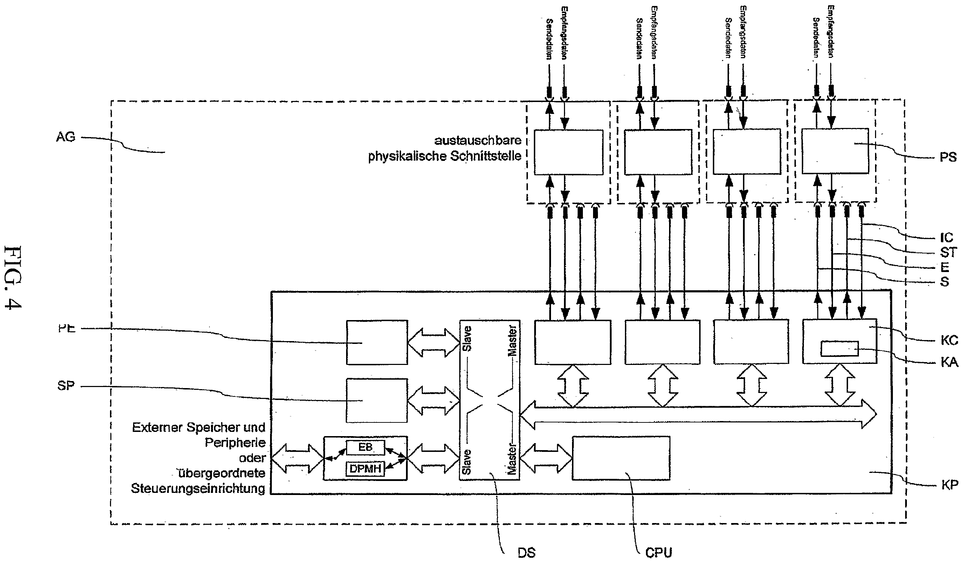

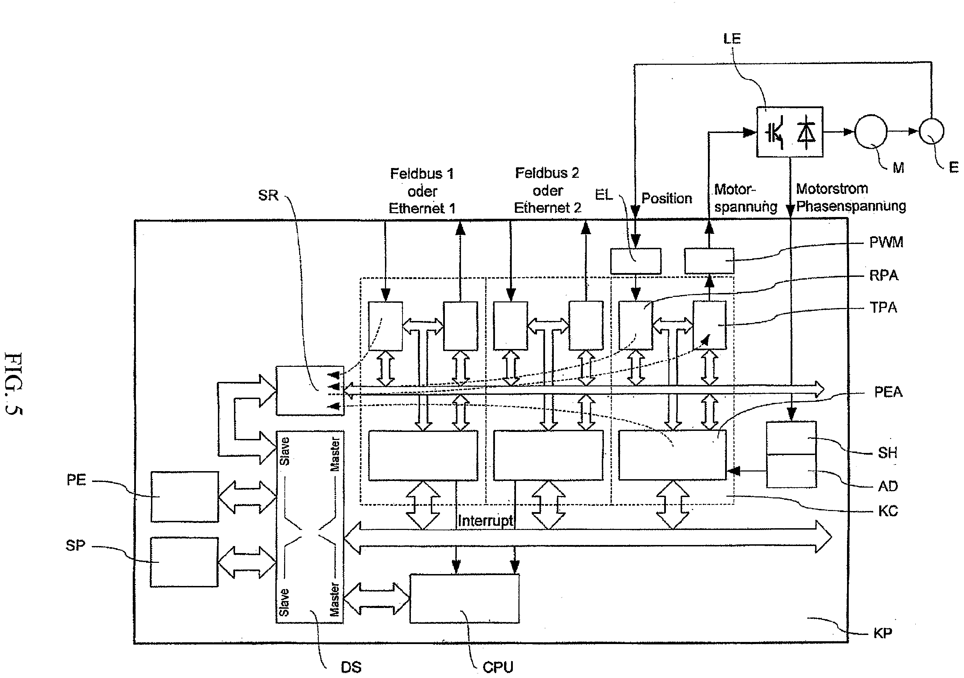

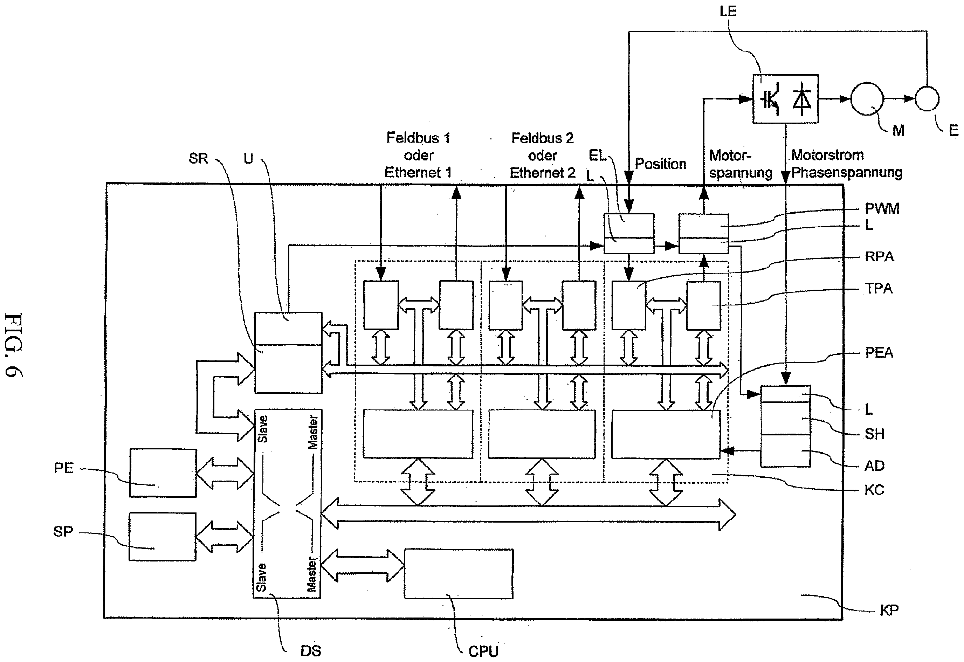

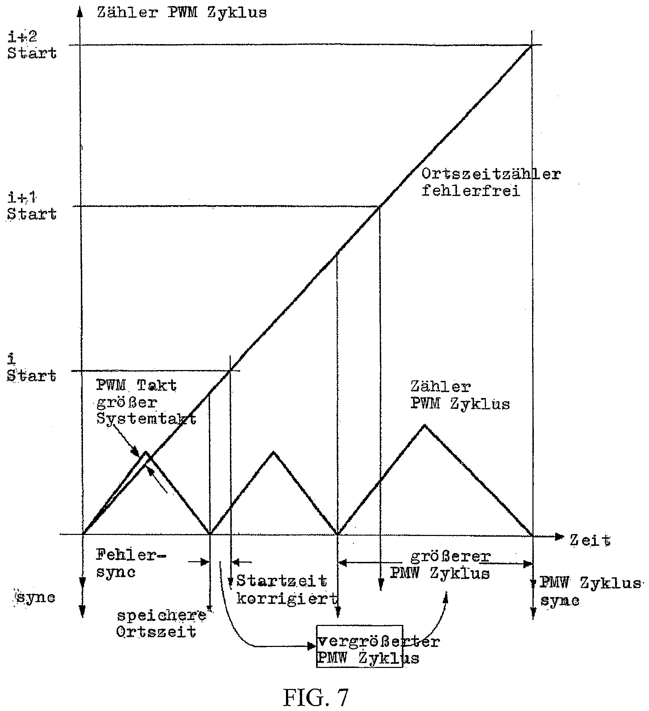

Bei der in FIG. 4 dargestellten erfindungsgemäßen Lösung eines Automatisierungsgeräts mit flexibler Kommunikationsstruktur weist das Basisboard des Automatisierungsgeräts AG einen Kommunikations-Prozessor KP mit mindestens einen, im dargestellten Ausführungsbeispiel vier, frei konfigurierbare Kommunikations-Controller KC auf. Erfindungsgemäß ist mindestens eine frei programmierbare Kommunikations-ALU KA im Kommunikations-Controller KC integriert. Die Kommunikations-ALUs KA haben, wie bereits vorstehend beschrieben, die Aufgabe, entsprechend der Übertragungsrate den empfangenen Bit- bzw. Nibble (halbes Byte) seriellen Datenstrom zu dekodieren und in eine parallele Darstellung (z.B. Byte, Wort oder Doppelwort) zu konvertieren und/oder Daten aus einer parallelen Darstellung in Bit- bzw. Nibble seriellen Datenstrom zu kodieren und mit der richtigen Übertragungsrate auf die Leitung zu geben und/oder den Sende- und Empfangsverlauf eines zusammengehörigen Datenpakets zu steuern.

Weiterhin enthält das Basisboard des Automatisierungsgeräts AG mindestens eine, im dargestellten Ausführungsbeispiel vier, über Signalleitungen IC, ST, ED, SD mit dem Kommunikations-Controller KC verbundene, austauschbare, physikalische Schnittstelle PS, über welche jeweils ein Identifizierungscode, Steuerdaten, Empfangsdaten und Sendedaten übertragen werden. Wie in FIG. 4 dargestellt, enthält der Kommunikations-Prozessor KP auch einen Data Switch DS, welcher beispielsweise eine 32-Bit Steuereinrichtung CPU und die Kommunikations-Controller KC (wobei in FIG. 4 vier getrennte Kommunikations-Controller KC dargestellt sind) mit einem Speicher SP, der internen Peripherie PE und einer Hoststeuereinrichtung HC verbindet. Die Hoststeuereinrichtung HC ist zwischen einem Erweiterungsbus EB zum Anschluss von externen Speicher und Peripheriebausteinen und einem Dual-port Memory DPMH zum Anschluss einer weiteren übergeordneten Steuereinrichtung umschaltbar. Der Data Switch DS vermeidet, wie bereits vorstehend beschrieben, somit den aus anderen Bus-Controllern bekannten "Flaschenhals" eines gemeinsamen Busses, indem er den gleichzeitigen Zugriff der Masterports (im Beispielsfall zwei) über die verschiedenen Slaveports (im Beispielsfall drei) auf die Daten ermöglicht. Dadurch können die Speicher und das Dual-port Memory DPMH parallel zum laufenden Betrieb gelesen und beschrieben werden, so dass eine industrielle Echtzeit-Ethernet-Lösung mit Netzwerkzyklen und Präzision im Mikrosekundenbereich ermöglicht wird, welche keine Unterstützung durch proprietäre Hardwarekomponenten oder ASICs benötigt. Dies gilt auch für die Optimierung und Anpassung der Echtzeit-Übertragung, wie Anpassung an die Anforderungen der Anwendung, des Systems und der Kommunikations-Architektur, so dass ein durchgängiger Datenzugriff von der Management- bis zur Feldebene gewährleistet ist.

Erfindungsgemäß sind also die Kommunikationsfunktionen nicht fest vorgegeben, sondern auf Basis von frei programmierbaren und auf Kommunikationsfunktionen optimierten Kommunikations-ALUs KA ausgebildet. Der Kommunikations-Controller KC liest in der Startphase den Identifizierungscode einer physikalischen Schnittstelle PS ein, konfiguriert danach die Kommunikations-ALU KA passend und lädt die zugehörige Firmware selbständig ein. Weiterhin beinhaltet der Kommunikations- Prozessor KP mehrere frei programmierbare Kommunikations-Kanäle und kann damit beliebige Kombinationen an Kommunikations-Standards realisieren. Vorzugsweise ist vorgesehen, dass der Kommunikations- Prozessor KP auf der Basis mehrerer frei programmierbarer Kommunikations- Controller KC neben den Kommunikations-Protokollen auch die Applikation ausführen kann. Erfindungsgemäß ist die physikalische Schnittstelle PS als eigenständiges, austauschbares Modul ohne eigene Intelligenz oder Controllerfunktionen ausgestaltet, welche sich durch einen Identifizierungscode in der Startphase beim frei programmierbaren Kommunikations-Controller KC anmeldet und diesen dazu ermächtigt, die passende Konfiguration und die zugehörige Firmware zu laden. Insbesondere können bei der erfindungsgemäßen Lösung nicht nur Master/Slave-Systeme sondern auch verteilte Steuerungen, welche zumindest partiell nicht-hierarchische Netzwerkarchitektur mit Durchlässigkeit in beide Richtungen erfordern, realisiert werden.

Bei der in FIG. 1 dargestellten Ausführungsform, arbeiten die frei programmierbaren Kommunikations-ALUs RPA, TPA, PEA völlig deterministisch und führen ohne die nach geschaltete Steuereinrichtung CPU beispielsweise synchronen Antriebsfunktionen selbständig aus, wobei insbesondere die Position, Motorspannung und Motorstrom bzw. Phasenspannung zwischen Kommunikations-Controller KC und Antrieb übertragen werden. Zwischen den Synchronisationszeitpunkten werden über Encoderlogiken (in der Zeichnung nicht dargestellt) oder einer Sample-Hold-Schaltung (in der Zeichnung nicht dargestellt) und einen AD-Wandler (in der Zeichnung nicht dargestellt) übertragenen Messwerte (Position oder Motorstrom bzw. Phasenspannung) bzw. über einen PWM-Modulator (in der Zeichnung nicht dargestellt) übertragenen Stellwerte mit der nachgeschalteten CPU ausgetauscht, womit deren Interruptlatenzzeiten dann nicht in die Synchronisation der Antriebsfunktionen eingehen. Demgemäß wird also eine direkte Synchronisation von Antriebsfunktionen, insbesondere das Messen der Position oder das Ausgeben der Stellgrößen, auf schnelle, deterministische und jitterfreie Kommunikationsverbindungen, insbesondere Realtime-Ethernet Verbindungen wie z.B. PROFINET, POWERLINK, SERCOS-3, EtherCAT ermöglicht.

Alternativ dazu kann der Antrieb eine lokale Zeit führen, die über Kommunikationsverbindungen mit den lokalen Zeiten auf anderen Antrieben auf eine innerhalb einer Automatisierungsanlage gemeinsamen Systemzeit synchronisiert werden. Zu fest definierten Zeitpunkten können dann auf den einzelnen Antrieben die synchronen Funktionen, wie das Messen der Position oder das Ausgeben des Motorstroms, aktiviert werden. Besondere Schwierigkeit besteht darin, dass die dazu benötigten Funktionen zyklisch ablaufen und der gesamte Zyklus sowohl in seiner Zykluszeit als auch in seiner Phasenlage auf die lokale Zeit zu synchronisieren ist. Hierzu kann zusätzlich eine lokale Uhr (in der Zeichnung nicht dargestellt) und im Verbindungsweg der Kommunikations-ALUs RPA, TPA, PEA jeweils ein Latch (in der Zeichnung nicht dargestellt) angeordnet werden. Zum Startzeitpunkt von zyklisch ablaufenden Steuerungsfunktionen wird die synchronisierte lokale Zeit im Latch abspeichert, es wird durch Differenzbildung mit der im Latch gespeicherten Zeit im letzten Startpunkt die Zykluszeit auf Basis der Zeit der lokalen Uhr gemessen und schließlich wird durch Vergrößern oder Verkleinern der aktuellen Zykluszeit, diese in Bezug auf die lokale Zeit konstant und in einer festen Phasenbeziehung gehalten. Dadurch ist der gesamte Zyklus sowohl in seiner Zykluszeit als auch in seiner Phasenlage auf die lokale Zeit synchronisiert. Demgemäß wird also eine direkte Synchronisation von zyklischen Antriebsfunktionen, insbesondere das Messen der Position oder das Ausgeben der Stellgrößen, auf eine lokale Systemzeit ermöglicht, die durch geeignete Protokolle, insbesondere IEEE 1588, innerhalb des Automatisierungssystems auf einen Gleichlauf nachgeregelt wird.

Auch wenn die Ausgestaltung der erfindungsgemäßen Lösung für den Einsatz bei der Automatisierungstechnik, insbesondere für Antriebsfunktionen beschrieben ist, (einschließlich universelle Kommunikations-Plattform für Barcode- und Identifikationssysteme, intelligente EAs, Low-Cost-Antriebe, SPSen oder Maschinenterminals) beschrieben ist, so ist der Einsatz des Verfahrens und der Vorrichtung auch in anderen Nachrichtennetzen mit entsprechenden Netzwerkübergängen möglich. Durch eine intelligente Verzahnung von Standardsteuerungs- und Sicherheitsfunktionen lassen sich sowohl Standardfunktionen als auch Sicherheitsfunktionen rückwirkungsfrei in einem System kombinieren. Die Modularität des Systems bietet dem Anwender große Flexibilität für maßgeschneiderte, jederzeit einfach erweiterbare Lösungen und erlaubt auch eine Migration. Dies ist darauf zurückzuführen, dass das erfindungsgemäße Konzept auf Vorleistungen in Nachrichtennetzen oder Systemen/Anlagen (auch für vermittelte Verbindungen) aufbaut und die einfache Anpassung an die jeweiligen Gegebenheiten und Einbindung ohne Änderung der Erfindung bzw. des Grundkonzepts erlaubt. Beispielsweise ermöglicht das erfindungsgemäße Verfahren einen kostengünstigen Aufbau beliebig vernetzbarer Busteilnehmer mit individueller interaktiver Kommunikation über beliebige drahtlose oder drahtgebundene Netzwerke bzw. Telekommunikationsnetze (beispielsweise UTRAN UMTS Terrestrial Radio Access Network). Der dabei ablaufende iterative Prozess des Netzwerkmanagementdienstes, insbesondere hinsichtlich des Dialogs umfasst alle sinnvoll vorkommende Dialogelemente (z.B. Initialisieren, Konfigurieren, Starten und Stoppen von Busteilnehmern (Geräten) oder Programmen, Kommunikationsprotokollen), welche entsprechend hinterlegt sind, kann insbesondere auch bei inhomogenen Strukturen eingesetzt werden und erlaubt auch ein Dialogmonitoring mit Einschluss der Busteilnehmer und des Dialogservers im Telekommunikationsnetz. So wird beispielsweise ein Zugriff auf Daten, Parameter, Funktionen in jedem Busteilnehmer von jedem Ort aus via Internet und auch eine einheitliche, geräteunabhängige Fehlerbehandlung ermöglicht. Weiterhin kann in vorteilhafter Weise die Initialisierung neuer und der Austausch fehlerhafter Geräte durch Plug- & Play verwirklicht werden und die flexiblen Kommunikations-Mechanismen ermöglichen den einfachen Einsatz in vielen Anwendungsfällen und Systemarchitekturen. Beispielsweise können bei der erfindungsgemäßen Lösung nicht nur Master/Slave-Systeme sondern auch verteilte Steuerungen, welche zumindest partiell nicht-hierarchische Netzwerkarchitektur mit Durchlässigkeit in beide Richtungen erfordern, realisiert werden. In Weiterbildung der Erfindung können beispielsweise im Dialogserver für TCP/IP und SPX/IPX Routing-Funktionalitäten (auch als LCR Least Cost Router) installiert werden usw.

## Patentansprüche

1. Verfahren zur Datenkommunikation, zur Kopplung von untereinander über einen seriellen Datenbus kommunizierenden Busteilnehmern eines offenen Automatisierungssystems mit verteilter Steuerung, welche über mindestens zwei Kommunikations-Controller (KC) mit einer übergeordneten Steuereinrichtung (CPU) zusammenarbeiten, bei dem:
• jeder Kommunikations-Controller (KC) aus mindestens drei frei programmierbaren Kommunikations-ALU (RPA, TPA, PEA) aufgebaut ist, die nämlich die erste Kommunikations-ALU (RPA), die zweite Kommunikations-ALU (TPA) und die dritte Kommunikations-ALU (PEA) genannt werden,
• für jeden Kommunikations-Controller, einem Befehlscode der ersten und zweiten Kommunikations-ALU (RPA, TPA) der Kommunikations-ALUs mehrere Befehle kodiert sind, wobei das Verfahren **dadurch gekennzeichnet** wird, dass für jeden Kommunikations-Controller:
• in der ersten und zweiten Kommunikations-ALU (RPA, TPA) Logikfunktionsblöcke (FI, Z, V, CRC) parallel zueinander angeordnet sind und gleichzeitig den Befehlscode verarbeiten, welche die Kommunikationsfunktionen ausführen,
• die erste Kommunikations-ALU (RPA) den Empfang und die Dekodierung eines Bit oder Nibble-orientierten, seriellen Datenstroms und dessen Seriell/Parallelwandlung in Byte, Wort oder Doppelwort Darstellung durchführt,
• die zweite Kommunikations-ALU (TPA) die Wandlung von Byte, Wort oder Doppelwort-Darstellung in Bit oder Nibble-orientierten serielle Daten und das Kodieren und Senden diese seriellen Datenstroms durchführt und die dritte Kommunikations-ALU (PEA) über eine Überwachungslogik verfügt, welche eine Vielzahl von Ereignissen gleichzeitig überwacht und welche im Ereignisfall innerhalb eines Systemtaktes mit dem zugehörigen Programmcode startet, wobei in einem Systemtakt mehrere Befehle ausgeführt werden und die
• dritte Kommunikations-ALU (PEA) den Sende- und Empfangsverlauf eines zugehörigen Datenpakets steuert,
wodurch die Kommunikationsfunktionen nicht fest vorgegeben sind, sondern mittels der frei programmierbaren Kommunikations-ALUs (RPA, TPA, PEA) ausgebildet sind, wobei jeder Kommunikations-Controller (KC) durch Einlesen eines Identifizierungscodes in der Startphase und danach jede zugehörige Kommunikations-ALU (RPA, TPA, PEA) passend konfiguriert und wodurch mittels der übergeordneten Steuereinrichtung (CPU) und jedem Kommunikations-Controller (KC) Übergänge zwischen Netzwerken realisiert werden.

2. Verfahren nach Anspruch 1, wobei für jeden Kommunikations-Controller (KC) die übergeordnete Steuereinrichtung (CPU) zusammen mit der oder den Kommunikations-ALUs (RPA, TPA, PEA) in einem Schaltkreis integriert sind, welcher zur Ankopplung an eine externe Steuereinrichtung (Hostsystem) ein Dual-port Memory (DPMH) enthält, oder dass die übergeordnete Steuereinrichtung (CPU) des Schaltkreises die gesamte Applikation ausführt und dieser dann zum Anschluss von externem Speicher und Peripheriebausteinen den internen Systembus als Extension Bus (EB) rausführt und dass für beide Betriebsarten die gleichen Signale benutzt und diese per Software umgeschaltet werden.

3. Verfahren nach Anspruch 1 wobei für jeden Kommunikations-Controller (KC) ein 64 Bit breiter Befehlscode (BC) benutzt wird, in dem mehrere Befehle kodiert sind, wobei diese Befehle in einem Systemtakt parallel ausgeführt werden und wobei diese Befehlen logische Operationen, Programmsprünge, Setzen und Löschen von Bits, Inkrementieren und Dekrementieren von Zählern, Transfer von Daten und Bedienen von speziellen Funktionsregistern sind.

4. Verfahren nach Anspruch 1, wobei für jeden Kommunikations-Controller (KC) die dritte Kommunikations-ALU (PEA) die Übergabe bestimmter Daten von der ersten Kommunikations-ALU (RPA), zur zweiten Kommunikations-ALU (TPA), zur übergeordneten Steuereinrichtung (CPU), das Ablaufen von Zeiten, das Erreichen bestimmter Zählerstände oder das Setzen bestimmter Zustandsbits, parallel überwacht.

5. Verfahren nach Anspruch 1, wobei für jeden Kommunikations-Controller (KC) jede Kommunikations-ALU (RPA, TPA, PEA) zur Seriell/Parallel- bzw. Parallel/Seriell-Wandlung mit weiteren Kommunikations-ALUs über einen gemeinsamen Registersatz (SR) gekoppelt ist, auf die alle gleichzeitig schreibend und lesend zugreifen, wobei beim Schreiben der letzte Wert gültig ist.

6. Verfahren nach Anspruch 2 und 5, wobei für jeden Kommunikations-Controller (KC) der Registersatz (SR) und das Dual-port Memory (DPM) jeder Kommunikations-ALU (RPA, TPA, PEA) parallel zum laufenden Betrieb von der übergeordneten Steuereinrichtung (CPU) gelesen und beschrieben werden.

7. Verfahren nach Anspruch 2 und 5 wobei für jeden Kommunikations-Controller (KC) der Kommunikations-Controller (KC) über einen DMA-Controller (DMA), einem Dual-port Memory (DPMH) und einem gemeinsamen Register (SR) mit der übergeordneten Steuereinrichtung (CPU) gekoppelt ist.

8. Verfahren nach Anspruch 1 wobei für mindestens einen Kommunikations-Controller, der weiter als den ersten Kommunikations-Controller genannt wird: dem Kommunikations-Controller (KC) und einer damit verbundenen physikalischen Schnittstelle (PS) ohne eigene Intelligenz oder controllerfunktion sind,
• die Kommunikationsfunktionen des ersten Kommunikations-Controllers nicht fest vorgegeben sind, sondern auf Basis von den frei programmierbaren und auf Kommunikationsfunktionen optimierten ALUs (KA) ausgebildet sind, indem diese Kommunikations-ALUs (KA) den empfangenen Bit- bzw. Nibble-(halbes Byte) seriellen Datenstrom entsprechend seiner Übertragungsrate dekodieren und in parallele Darstellung (z.B. Byte, Wort oder Doppelwort) konvertieren und/oder Daten aus der parallelen Darstellung in den Bit- bzw. Nibble- seriellen Datenstrom mit richtiger Übertragungsrate kodieren und auf eine Signalleitung (S) geben und / oder den Sende- und Empfangsverlauf des zugehörigen Datenpakets steuern und dass die Zuordnung von der physikalischer Schnittstelle und dem Kommunikations-Controller (KC) bis zum Austausch bestehen bleibt,
• in der Startphase die physikalische Schnittstelle (PS) über eine Signalleitung (IC) einen Identifizierungscode an den Kommunikations-Controller (KC) sendet und
• der Kommunikations-Controller (KC) selbständig die richtige Konfiguration durchführt und die zugehörige Software in die Kommunikations-ALUs (KA) des Kommunikations-Controllers (KC) lädt,
so dass die physikalische Schnittstelle (PS) austauschbar ist und Erweiterungen innerhalb einer Feldbusspezifikation oder Implementierungen komplett neuer Feldbussysteme per Softwareupdate erfolgen.

9. Vorrichtung zur Datenkommunikation, zur Kopplung von untereinander über einen seriellen Datenbus kommunizierenden Busteilnehmern eines offenen Automatisierungssystems mit verteilter Steuerung, mit:
• mindestens zwei Kommunikations-Controllern (KC), welche mit einer übergeordneten Steuereinrichtung (CPU) zusammenarbeiten und welche mindestens drei frei programmierbare Kommunikations-ALU (RPA, TPA, PEA) aufweisen, die nämlich die erste Kommunikations-ALU (RPA), die zweite Kommunikations-ALU (TPA) und die dritte Kommunikations-ALU (PEA) genannt werden,
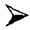 einem Befehlscode, in welchem mehrere Befehle kodiert sind, wobei die Vorrichtung durch folgende Merkmale gekennzeichnet wird:
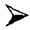 einer parallelen Anordnung von mindestens zwei Logikfunktionsblöcken (FI, Z, V, CRC), die gleichzeitig den Befehlscode verarbeiten, in den ersten und zweiten Kommunikations-ALU (RPA, TPA), welche die Kommunikationsfunktionen ausführen,
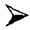 die erste Kommunikations-ALU (RPA) den Empfang und die Dekodierung eines Bit oder Nibble-orientierten, seriellen Datenstroms und dessen Seriell/Parallelwandlung in Byte, Wort oder Doppelwort Darstellung durchführt,
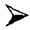 die zweite Kommunikations-ALU (TPA) die Wandlung von Byte, Wort oder Doppelwort Darstellung in Bit oder Nibble-orientierten serielle Daten und das Kodieren und Senden diese seriellen Datenstroms durchführt und
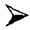 die dritte Kommunikations-ALU (PEA) über eine Überwachungslogik verfügt, welche eine Vielzahl von Ereignissen gleichzeitig überwacht und welche im Ereignisfall innerhalb eines Systemtaktes mit dem zugehörigen Programmcode startet, wobei in einem Systemtakt mehrere Befehle ausgeführt werden, und die dritte Kommunikations-ALU (PEA) den Sende- und Empfangsverlauf eines zugehörigen Datenpakets steuert,
• wodurch die Kommunikationsfunktionen nicht fest vorgegeben sind, sondern mittels der frei programmierbaren Kommunikations-ALUs (RPA, TPA, PEA) ausgebildet sind, wobei jeder Kommunikations-Controller (KC) durch Einlesen eines Identifizierungscodes in der Startphase und danach jede zugehörige Kommunikations-ALU (RPA, TPA, PEA) passend konfiguriert, und wodurch mittels der übergeordneten Steuereinrichtung (CPU) und zweier Kommunikations-Controller (KC) Übergänge zwischen Netzwerken realisiert werden.

10. Vorrichtung nach Anspruch 9, wobei für jeden Kommunikations-Controller (KC) zur Seriell/Parallel- bzw. Parallel/Seriell-Wandlung von ein bis 32 Bit breiten Daten und deren Kodierung und Dekodierung, die parallel liegenden Logikfunktionsblöcke (FI, Z, V, CRC) mindestens ein Schieberegister (FI), mindestens einen Zähler (Z) und mindestens einen Vergleicher (V), welche die seriellen Daten auswerten und in Abhängig von vorgegebenen Werten Statusbits in Flags (F) setzen, und mindestens einen CRC-Generator (CRC), welcher auf Befehl der Kommunikations-ALU (RPA, TPA, PEA) die seriellen Daten in die Berechnung des CRC-Polynoms aufnimmt, aufweisen.

11. Vorrichtung nach Anspruch 9, wobei für jeden Kommunikations-Controller (KC) die Kommunikations-ALUs (RPA, TPA, PEA) zur Seriell/Parallel- bzw. Parallel/Seriell-Wandlung mit weiteren Kommunikations-ALUs (RPA, TPA, PEA) über FIFOs und zusätzlich über Befehls- und Statusregister angekoppelt sind oder dass die weiteren Kommunikations-ALUs (RPA, TPA, PEA) über einen gemeinsamen Registersatz (SR) gekoppelt sind, auf die alle gleichzeitig schreibend und lesend zugreifen, wobei beim Schreiben der letzte Wert gültig ist.

12. Vorrichtung nach Anspruch 9, wobei für jeden Kommunikations-Controller (KC) eine über vier Signalleitungen zur Übertragung jeweils eines Identifizierungscodes, Steuerdaten, Empfangsdaten und Sendedaten (IC, ST, ED, SD) mit dem Kommunikations-Controller (KC) verbundene, austauschbare, physikalische Schnittstelle (PS) ohne eigene Intelligenz oder Controllerfunktion vorgesehen ist, welche sich durch einen Identifizierungscode in der Startphase beim frei programmierbaren Kommunikations-Controller (KC) anmeldet, so dass die physikalische Schnittstelle (PS) austauschbar ist und Erweiterungen innerhalb einer Feldbusspezifikation oder Implementierungen komplett neuer Feldbussysteme per Softwareupdate erfolgen.

13. Vorrichtung nach Anspruch 9 wobei für jeden Kommunikations-Controller (KC) in einem Kommunikations-Prozessor (KP) mehrere der frei programmierbaren Kommunikations-Controller (KC) mit jeweils einer diesen zugeordneten physikalischen Schnittstelle (PS) enthalten sind.

14. Vorrichtung nach Anspruch 9, wobei für jeden Kommunikations-Controller (KC) der Kommunikations-Prozessor (KP) einen Data Switch (DS) enthält, welcher die Steuereinrichtung (CPU) und die Kommunikations-Controller (KC) mit einem Speicher (SP), einer internen Peripherie (PE) und einer Hoststeuereinrichtung (HC) verbindet.

15. Vorrichtung nach Anspruch 9, wobei für jeden Kommunikations-Controller (KC) die Hoststeuereinrichtung (HC) zwischen einem Erweiterungsbus (EB) zum Anschluss von externen Speicher und Peripheriebausteinen und einem Dual-port Memory (DPMH) zum Anschluss einer weiteren übergeordneten Steuereinrichtung umschaltbar ist.

16. Vorrichtung nach Anspruch 9, wobei für jeden Kommunikations-Controller (KC) die physikalische Schnittstelle (PS) als gedruckte Schaltung mit einem Anschlussstecker eines Kommunikationsnetzwerkes oder mit einem Anschlussstecker eines Kommunikationsnetzwerkes als eine integrierte Einheit ausgestaltet ist und dass der Kommunikations-Prozessor (KP) sowohl eine Applikation als auch ein Übertragungsprotokoll abarbeitet.

## Claims

1. A method for data communication, for coupling bus subscribers of an open automation system with distributed control, communicating with one another via a serial data bus, which interact via at least two communication controllers (KC) with a higher-level control device (CPU), in which:
• each communication controller (KC) comprises at least three freely programmable communication ALU (RPA, TPA, PLA), namely the first communication ALU (RPA), the second communication ALU (TPA) and the third communication ALU (PEA),
• a plurality of commands are coded for each communication controller of a command code of the first and second communication ALU (RPA, TPA) of the communication ALUs, wherein the method is **characterized in that** for each communication controller:
• logic function blocks (FI, Z, V, CRC) are arranged parallel to one another in the first and second communication ALU (RPA, TPA) and simultaneously process the command code, which carry out the communication functions,
• the first communication ALU (RPA) carries out the reception and decoding of a bit or nibble-oriented serial data stream and the serial/parallel conversion thereof in byte, word or double word representation,
• the second communication ALU (TPA) carries out the conversion of byte, word or double-word representation into bits or nibble-oriented serial data and the coding and transmission carries out this serial data stream and the third communication ALU (PEA) has a monitoring logic, which simultaneously monitors a multiplicity of events and which, in the event of an event, starts within a system clock with the associated program code, wherein a plurality of commands are executed in one system clock and
• the third communication ALU (PEA) controls the transmission and reception profile of an associated data packet,
whereby the communication functions are not permanently predefined but are formed by means of the freely programmable communication ALUs (RPA, TPA, PEA), wherein each communication controller (KC) is suitably configured by reading in an identification code in the start phase and then each associated communication ALU (RPA, TPA, PEA) and whereby transitions between networks are realized by means of the superordinate control device (CPU) and each communication controller (KC).

2. The method according to claim 1, wherein for each communication controller (KC) the higher-level control device (CPU) together with the communication ALUs (RPA, TPA, PEA) are integrated in a circuit, which contains a dual-port memory (DPMH) for coupling to an external control device (host system), or in that the higher-level control device (CPU) of the circuit executes the entire application and the latter then executes the internal system bus as an extension bus (EB) for the connection of external memory and peripheral modules, and in that the same signals are used for both operating modes and these are switched over by software.

3. The method according to claim 1, wherein for each communication controller (KC) a 64 bit wide command code (BC) is used in which a plurality of commands are encoded, wherein these commands are executed in parallel in a system clock, and wherein these commands are logical operations, program jumps, setting and deleting bits, incrementing and decrementing counters, transferring data and operating special function registers.

4. The method according to claim 1, wherein, for each communication controller (KC), the third communication ALU (PEA) monitors in parallel the transfer of certain data from the first communication ALU (RPA) to the second communication ALU (TPA), to the higher-order control device (CPU), the expiry of times, the attainment of specific counter readings or the setting of certain status bits.

5. The method according to claim 1, wherein for each communication controller (KC), each communication ALU (RPA, TPA, PEA) for serial/parallel or parallel/serial conversion is coupled to further communication ALUs via a common register set (SR), all of which simultaneously write and read simultaneously, the last value being valid during writing.

6. The method according to claim 2 and 5, wherein, for each communication controller (KC), the register set (SR) and the dual-port memory (DPM) of each communication ALU (RPA, TPA, PRA) are read and written in parallel during operation by the higher-level control device (CPU).

7. The method according to claim 2 and 5, wherein, for each communication controller (KC), the communication controller (KC) is coupled to the higher-level control device (CPU) via a DMA controller (DMA), a dual-port memory (DPMH) and a common register (SR).

8. The method according to claim 1, wherein, for at least one communication controller, which is further called the first communication controller (KC) and a physical interface (PS) connected thereto, is without its own intelligence or controller function,
• the communication functions of the first communication controller are not permanently predefined, but on the basis of the freely programmable ALUs (KA), whereby said communication ALUs (KA) decode the received bit or nibble (half byte) serial data stream according to its transmission rate and convert it into parallel representation (e.g. byte, word or double word) and/or code data from the parallel representation into the bit or nibble serial data stream with the correct transmission rate and transmit it to a signal line (S) and/or control the transmission and reception profile of the associated data packet, and in that the assignment remains between the physical interface and the communication controller (KC) until exchange,
• in the start phase, the physical interface (PS) transmits an identification code to the communication controller (KC) via a signal line (IC) and
• the communication controller (KC) automatically carries out the correct configuration and loads the associated software into the communication ALUs (KA) of the communication controller (KC),
so that the physical interface (PS) can be exchanged and extensions can be made within a field bus specification or implementations of completely new field bus systems by software update.

9. A data communication device for coupling bus subscribers of an open automation system with distributed control, said bus subscribers communicating with each other via a serial data bus:
• at least two communication controllers (KC), which interact with a higher-level control device (CPU) and which comprise at least three freely programmable communication ALUs (RPA, TPA, PFA), namely the first communication ALU (RPA), the second communication ALU (TPA) and the third communication ALU (PEA),
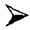 a command code in which a plurality of commands are encoded, wherein the device is **characterized by** the following features:
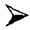 a parallel arrangement of at least two logic function blocks (FI, Z, V, CRC), which simultaneously process the command code into the first and
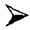 second communication ALU (RPA, TPA), which carries out the communication functions,
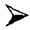 the first communication ALU (RPA) carries out the reception and decoding of a bit or nibble-oriented serial data stream and its serial/parallel conversion into byte, word or double word representation,
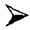 the second communication ALU (TPA) carries out the conversion of byte, word or double word representation into bits or nibble-oriented serial data and the coding and transmission carries out this serial data stream and
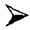 the third communication ALU (PEA) has a monitoring logic, which simultaneously monitors a plurality of events and which, in the event of an event, starts within a system clock with the associated program code, wherein a plurality of commands are executed in a system clock, and the third communication ALU (PEA) controls the transmission and reception profile of an associated data packet,
• wherein the communication functions are not permanently predefined but are formed by means of the freely programmable communication ALUs (RPA, TPA, PEA), wherein each communication controller (KC) is suitably configured by reading in an identification code in the start phase and later each associated communication ALU (RPA, TPA, PEA) is suitably configured, and whereby transitions between networks are realized by means of the higher-level control device (CPU) and two communication controllers (KC).

10. The device according to claim 9, wherein for each communication controller (KC) for serial/parallel or parallel/serial conversion from one to 32 bit wide data and the coding and decoding thereof, the parallel logic function blocks (FI, Z, V, CRC) comprise at least one shift register (FI), at least one counter (Z) and at least one comparator (V), which evaluate the serial data and set status bits in flags (F) as a function of predetermined values, and at least one CRC generator (CRC), which receives the serial data in the calculation of the CRC polynomial on command of the communication ALU (RPA, TPA, PEA).

11. The device according to claim 9, wherein for each communication controller (KC) the communication ALUs (RPA, TPA, PEA) for serial/parallel or parallel/serial conversion are coupled to further communication ALUs (RPA, TPA, PEA) via FIFOs and additionally via command and status registers, or in that the further communication ALUs (RPA, TPA, PFA) are coupled via a common register set (SR), to which all the further communication ALUs (RPA, TPA, PFA) are coupled via a common register set (SR), all of which simultaneously write and read, wherein the last value being valid during writing.

12. The device according to claim 9, wherein for each communication controller (KC) one of which has four signal lines for transmitting in each case one identification code, control data, reception data and transmission data (IC, ST, ED, SD) is provided with an exchangeable physical interface (PS),which is connected to the communication controller (KC) without its own intelligence or controller function and which is registered by an identification code in the start phase in the freely programmable communication controller (KC), so that the physical interface (PS) can be exchanged and extensions can be made according to a field bus specification or implementations of completely new field bus systems are carried out by software update.

13. The device according to Claim 9, wherein for each communication controller (KC) in a communication processor (KP), a plurality of the freely programmable communication controllers (KC) with in each case one physical interface (PS) assigned to them are contained.

14. The device according to Claim 9, wherein for each communication controller (KC) the communication processor (KP) contains a data switch (DS), which connects the control device (CPU) and the communication controllers (KC) to a memory (SP), an internal periphery (PE) and a host control device (HC).

15. The device according to claim 9, wherein for each communication controller (KC) the host control device (HC) can be switched between an expansion bus (EB) for connecting external memories and peripheral modules and a dual-port memory (DPMH) for connecting a further higher-level control device.

16. The device as claimed in claim 9, wherein the physical interface (PS) is designed as a printed circuit with a connection plug of a communication network or with a connection plug of a communication network as an integrated unit for each communication controller (KC), and in that the communication processor (KP) processes both an application and a transmission protocol.

## Revendications

1. Un procédé de communication de données, pour coupler des abonnés de bus d'un système d'automatisation ouvert à commande répartie, communiquant les uns avec les autres par l'intermédiaire d'un bus de données série, qui interagissent par l'intermédiaire d'au moins deux contrôleurs de communication (KC) avec un dispositif de commande de niveau supérieur (CPU), dans lequel :
• chaque contrôleur de communication (KC) comprend au moins trois ALU de communication librement programmables (RPA, TPA, PLA), à savoir la première ALU de communication (RPA), la deuxième ALU de communication (TPA) et la troisième ALU de communication (PEA),
• une pluralité de commandes sont codées pour chaque contrôleur de communication d'un code de commande de la première et de la deuxième ALU de communication (RPA, TPA) de l'ALU de communication, le procédé étant **caractérisé en ce que**
pour chaque dispositif de commande de communication:
• des blocs fonctionnels logiques (FI, Z, V, CRC) sont disposés parallèlement les uns aux autres dans les première et deuxième ALU de communication (RPA, TPA) et traitent simultanément le code de commande, qui réalise les fonctions de communication,
• la première ALU de communication (RPA) réalise la réception et le décodage d'un train de données série orienté bit ou quartet et la conversion série/parallèle de celui-ci sous forme d'octet, de mot ou de double mot,
• la deuxième ALU de communication (TPA) réalise la conversion d'octet, de mot ou de représentation à double mot en bits ou en données série orientées quartet et le codage et la transmission réalisent ce flux de données série et la troisième ALU de communication (PEA) comporte une logique de surveillance, qui surveille simultanément une multiplicité d'événements et qui, en cas d'événement, commence dans une horloge système avec le code de programme associé, une pluralité de commandes étant exécutées dans une horloge système et
• la troisième ALU de communication (PEA) commande le profil d'émission et de réception d'un paquet de données associé,
les fonctions de communication ne sont pas prédéfinies en permanence mais sont formées au moyen du dispositif de communication librement programmable (RPA, TPA, PEA), chaque contrôleur de communication (KC) étant configuré de manière appropriée par lecture dans un code d'identification dans la phase de démarrage, puis chaque ALU de communication associée (RPA, TPA, PEA) et par laquelle les transitions entre les réseaux sont réalisées au moyen du dispositif de commande supérieur (CPU) et de chaque contrôleur de communication (KC).

2. Le procédé selon la revendication 1, **caractérisé en ce que** pour chaque contrôleur de communication (KC) le dispositif de commande supérieur (CPU) conjointement avec l'ALUs de communication (RPA, TPA, PEA) sont intégrés dans un circuit qui contient une mémoire à double accès (DPMH) pour le couplage à un dispositif de commande externe (système hôte), ou **en ce que** le dispositif de commande supérieur (CPU) du circuit exécute toute l'application et celui-ci exécute ensuite le bus de système interne en tant que bus d'extension (EB) pour la connexion de mémoire externe et de modules périphériques, et **en ce que** les mêmes signaux sont utilisés pour les deux modes de fonctionnement et ceux-ci sont commutés par logiciel.

3. Le procédé selon la revendication 1, dans lequel, pour chaque contrôleur de communication (KC), un code de commande à 64 bits (BC) est utilisé dans lequel une pluralité de commandes sont codées, ces commandes étant exécutées en parallèle dans une horloge système, et ces commandes étant des opérations logiques, des sauts de programme, des bits de réglage et de suppression, des compteurs d'incrémentation et de décrémentation, des données de transfert et des registres fonctionnels spéciaux de fonctionnement.

4. Le procédé selon la revendication 1, dans lequel, pour chaque contrôleur de communication (KC), la troisième ALU de communication (PEA) surveille en parallèle le transfert de certaines données de la première ALU de communication (RPA) à la deuxième ALU de communication (TPA), au dispositif de commande supérieur (CPU), l'expiration de temps, l'obtention de lectures de compteur spécifiques ou le réglage de certains bits d'état.

5. Le procédé selon la revendication 1, dans lequel pour chaque contrôleur de communication (KC), chaque ALU de communication (RPA, TPA, PEA) pour la conversion série/parallèle ou parallèle/série est couplée à une autre communication ALUs par l'intermédiaire d'un ensemble de registres communs (SR), tous ceux-ci écrivent et lisent simultanément, la dernière valeur étant valide pendant l'écriture.

6. Le procédé selon la revendication 2 et 5, dans lequel, pour chaque contrôleur de communication (KC), l'ensemble de registres (SR) et la mémoire à double port (DPM) de chaque ALU de communication (RPA, TPA, PRA) sont lus et écrits en parallèle pendant le fonctionnement par le dispositif de commande supérieur (CPU).

7. Le procédé selon les revendications 2 et 5, dans lequel, pour chaque contrôleur de communication (KC), le contrôleur de communication (KC) est couplé au dispositif de commande supérieur (CPU) par l'intermédiaire d'un contrôleur DMA (DMA), d'une mémoire à double accès (DPMH) et d'un registre commun (SR).

8. Le procédé selon la revendication 1, dans lequel, pour au moins un contrôleur de communication, qui est en outre appelé premier contrôleur de communication (KC) et une interface physique (PS) connectée à celui-ci, est dépourvu de sa propre fonction d'intelligence ou de commande,
• les fonctions de communication du premier contrôleur de communication ne sont pas prédéfinies en permanence, mais sur la base de l'ALUs (KA) librement programmable, ladite communication ALUs (KA) décoder le train de données série de bit ou de quartet reçu (demi-octet) en fonction de sa vitesse de transmission et le convertir en représentation parallèle (par exemple octet, mot ou mot double) et/ou des données de code à partir de la représentation parallèle dans le flux de données série de bit ou de quartet avec le débit de transmission correct et la transmettre à une ligne de signal (S) et/ou commander le profil d'émission et de réception du paquet de données associé, et en ce que l'attribution reste entre l'interface physique et le contrôleur de communication (KC) jusqu'à l'échange,
• dans la phase de démarrage, l'interface physique (PS) transmet un code d'identification au contrôleur de communication (KC) par l'intermédiaire d'une ligne de signal (IC) et
• le contrôleur de communication (KC) réalise automatiquement la configuration correcte et charge le logiciel associé dans la communication ALUs (KA) du contrôleur de communication (KC),
de telle sorte que l'interface physique (PS) peut être échangée et des extensions peuvent être réalisées dans une spécification de bus de terrain ou des mises en œuvre de systèmes de bus de terrain complètement nouveaux par mise à jour de logiciel.

9. Un dispositif de communication de données pour coupler des abonnés de bus d'un système d'automatisation ouvert à commande répartie, lesdits abonnés de bus communiquant les uns avec les autres par l'intermédiaire d'un bus de données série :
• au moins deux contrôleurs de communication (KC), qui interagissent avec un dispositif de commande supérieur (CPU) et qui comprennent au moins trois ALU de communication librement programmables (RPA, TPA, PFA), à savoir la première ALU de communication (RPA), la deuxième ALU de communication (TPA) et la troisième ALU de communication (PEA),
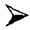 un code de commande dans lequel une pluralité de commandes est codée, le dispositif étant **caractérisé par** les caractéristiques suivantes :
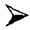 dans un agencement parallèle d'au moins deux blocs fonctionnels logiques (FI, Z, V, CRC), qui traitent simultanément le code de commande dans la première et seconde ALU de communication (RPA, TPA), qui réalise les fonctions de communication,
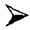 la première ALU de communication (RPA) réalise la réception et le décodage d'un train de données série orienté bit ou quartet et sa conversion série/parallèle en une représentation d'octet, de mot ou de double mot,
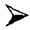 la seconde ALU de communication (TPA) réalise la conversion d'octet, de mot ou de représentation de mot double en bits ou en données série orientées quartet et le codage et la transmission réalisent ce flux de données en série et
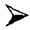 la troisième ALU de communication (PEA) comprend une logique de surveillance, qui surveille simultanément une pluralité d'événements et qui, en cas d'événement, commence dans une horloge système avec le code de programme associé, une pluralité de commandes étant exécutées dans une horloge système, et la troisième ALU de communication (PEA) commandant le profil d'émission et de réception d'un paquet de données associé,
• les fonctions de communication ne sont pas prédéfinies en permanence mais sont formées au moyen de la communication librement programmable ALUs (RPA, TPA, PEA), chaque contrôleur de communication (KC) étant configuré de façon appropriée par lecture dans un code d'identification dans la phase de démarrage et chaque ALU de communication associée (RPA, TPA, PEA) étant configurée de façon appropriée, et moyennant quoi les transitions entre les réseaux sont réalisées au moyen du dispositif de commande supérieur (CPU) et de deux contrôleurs de communication (KC).

10. Le dispositif selon la revendication 9, **caractérisé en ce que** pour chaque contrôleur de communication (KC) pour une conversion série/parallèle ou parallèle/série d'un à 32 données à large bande et le codage et le décodage de celles-ci, les blocs à fonction logique parallèles (FI, Z, V, CRC) comprenant au moins un registre à décalage (FI), au moins un compteur (Z) et au moins un comparateur (V), qui évaluent les données en série et des bits d'état réglés en drapeaux (F) en fonction de valeurs prédéterminées, et au moins un générateur de CRC (CRC), qui reçoit les données en série dans le calcul du polynôme CRC sur commande de l'ALU de communication (RPA, TPA, PEA).

11. Le dispositif selon la revendication 9, **caractérisé en ce que** pour chaque contrôleur de communication (KC) la communication ALUs (RPA, TPA, PEA) pour la conversion série/parallèle ou parallèle/série sont couplés à une autre communication ALUs (RPA, TPA, PEA) par l'Intermédiaire de FIFO et de plus par l'intermédiaire de registres de commande et d'état, ou **en ce que** l'autre communication ALUs (RPA, TPA, PFA) sont couplée par l'intermédiaire d'un ensemble de registres communs (SR), tous les autres ALUs de communication (RPA, TPA, PFA) étant couplés par l'intermédiaire d'un ensemble de registres communs (SR), tous ceux-ci écrivent et lisent simultanément, **en ce que** la dernière valeur est valide pendant l'écriture.

12. Le dispositif selon la revendication 9, **caractérisé en ce que** pour chaque contrôleur de communication (KC) dont l'un comporte quatre lignes de signal pour émettre dans chaque cas un code d'identification, des données de commande, des données de réception et des données de transmission (IC, ST, ED, SD) est pourvu d'une interface physique (PS) interchangeable, qui est connectée au contrôleur de communication (KC) sans sa propre fonction d'intelligence ou de commande et qui est enregistrée par un code d'identification dans la phase de démarrage dans le contrôleur de communication librement programmable (KC), de telle sorte que l'interface physique (PS) peut être échangée et des extensions peuvent être réalisées selon une spécification de bus de terrain ou des mises en œuvre de systèmes de bus de terrain complètement nouveaux sont réalisées par mise à jour de logiciel.

13. Le dispositif selon la revendication 9, dans lequel, pour chaque contrôleur de communication (KC) dans un processeur de communication (KP), une pluralité des contrôleurs de communication librement programmables (KC) avec respectivement une interface physique (PS) associée à ceux-ci sont contenus.

14. Le dispositif selon la revendication 9, dans lequel, pour chaque contrôleur de communication (KC), le processeur de communication (KP) contient un commutateur de données (DS), qui connecte le dispositif de commande (CPU) et les contrôleurs de communication (KC) à une mémoire (SP), une périphérie interne (PE) et un dispositif de commande hôte (HC).

15. Le dispositif selon la revendication 9, pour chaque contrôleur de communication (KC), le dispositif de commande hôte (HC) peut être commuté entre un bus d'expansion (EB) pour connecter des mémoires externes et des modules périphériques et une mémoire à double accès (DPMH) pour connecter un autre dispositif de commande supérieur.

16. Le dispositif selon la revendication 9, l'interface physique (PS) est réalisée sous la forme d'un circuit imprimé avec une fiche de connexion d'un réseau de communication ou avec une fiche de connexion d'un réseau de communication en tant qu'unité intégrée pour chaque contrôleur de communication (KC), et en ce que le processeur de communication (KP) traite à la fois une application et un protocole de transmission.
